# EUROPEAN PATENT APPLICATION

(11) **EP 4 425 897 A1**
(43) Date of publication of application: **04.09.2024**
(21) Application number: 22966013.9
(22) Date of filing: 30.12.2022
(51) Int. Cl.: H04L 67/60, H04L 47/56

(54) **DETERMINISTIC FLOW TRANSMISSION METHOD AND APPARATUS, AND ELECTRONIC DEVICE**

(71) Applicant: New H3C Technologies Co., Ltd., Binjiang District Hangzhou Zhejiang 310052 (CN)
(72) Inventor: GUO, Daorong, Beijing 100102 (CN); YOU, Xuejun, Beijing 100102 (CN)
(74) Representative: Bandpay & Greuter
(86) International application number: PCT/CN2022/143919
(87) International publication number: WO 2024/138633

(57) **Abstract**

Methods and apparatuses for transmitting a deterministic flow and an electronic device are provided. By improvements on an ingress node and an egress node of the deterministic flow in a deterministic network domain, reliable CSQF-based transmission of wide area deterministic flow can be achieved. Further, by using the embodiments of the present disclosure, coexistence of the deterministic flow and a best-effort flow can be achieved so as to promote full-service full-fusion of common network and common path.

## Description

### TECHNICAL FIELD

The present disclosure relates to the field of network communication technologies and in particular to methods and apparatuses for transmitting deterministic flow and an electronic device.

### BACKGROUND

In a transmission process, a deterministic flow (also referred to as deterministic traffic) usually goes across deterministic network domains. For example, a deterministic flow sent by one end (Talker) runs through a plurality of interconnected deterministic network domains to the other end (Listener). But, for an ingress node, for example, Ingress Gateway (I-Gw) by which the deterministic flow enters the deterministic network domain, the problem of resource preemption may occur, which affects reliable transmission of the deterministic flow.

### SUMMARY

In the embodiments of the present disclosure, there are provided methods and apparatuses for transmitting a deterministic flow and an electronic device so as to realize reliable transmission of the deterministic flow.

In an embodiment of the present disclosure, there is provided a method of transmitting a deterministic flow, which is applied to an ingress node of the deterministic flow in a deterministic network domain. The method includes:
receiving a deterministic flow data packet;
determining an index number of an elastic buffer queue (EQ) for buffering the deterministic flow data packet and buffering the deterministic flow data packet in the EQ corresponding to the index number of the EQ;
in a current scheduling cycle Cycle x, obtaining a planned EQ resource of a next scheduling cycle Cycle (x+1), where the EQ resource at least includes: an EQ index number and a planned transmission resource amount of the EQ corresponding to the EQ index number; obtaining at least one deterministic flow data packet from the EQ corresponding to the obtained EQ index number, where a transmission resource demand amount required by the obtained at least one deterministic flow data packet is less than or equal to the transmission resource amount; storing the obtained at least one deterministic flow data packet into a physical queue corresponding to the next scheduling cycle Cycle (x+1) so as to schedule the deterministic flow data packet in the physical queue when the next scheduling cycle Cycle (x+1) arrives.

In an embodiment of the present disclosure, there is provided a method of transmitting a deterministic flow, which is applied to an egress node of the deterministic flow in a deterministic network domain. The method includes:
receiving and buffering a deterministic flow data packet;
based on a current timestamp TSc and a time parameter carried in the deterministic flow data packet, determining a compensation time length Ct corresponding to the deterministic flow data packet;
based on the Ct, performing latency compensation and scheduling control on the deterministic flow data packet.

In an embodiment of the present disclosure, there is further provided an apparatus for transmitting a deterministic flow, which is applied to an ingress node of the deterministic flow in a deterministic network domain. The apparatus includes:
an input processing unit, configured to receive a deterministic flow data packet and determine an index number of an elastic buffer queue (EQ) for buffering the deterministic flow data packet;
an output interface unit, configured to buffer the deterministic flow data packet in the EQ corresponding to the index number of the EQ; in a current scheduling cycle Cycle x, obtain a planned EQ resource of a next scheduling cycle Cycle (x+1), where the EQ resource at least includes: an EQ index number and a planned transmission resource amount of the EQ corresponding to the EQ index number; obtain at least one deterministic flow data packet from the EQ corresponding to the obtained EQ index number, where a transmission resource demand amount required by the obtained at least one deterministic flow data packet is less than or equal to the transmission resource amount; store the obtained at least one deterministic flow data packet into a physical queue corresponding to the next scheduling cycle Cycle (x+1) so as to schedule the deterministic flow data packet in the physical queue when the next scheduling cycle Cycle (x+1) arrives.

In an embodiment of the present disclosure, there is further provided an apparatus for transmitting a deterministic flow, which is applied to an egress node of the deterministic flow in a deterministic network domain. The apparatus includes: an output interface unit.

The output interface unit at least includes a latency compensation calculation processing (CCP) unit and a scheduling control unit.

The CCP unit is configured to receive and buffer a deterministic flow data packet, and based on a current timestamp TSc and a time parameter carried in the deterministic flow data packet, determine a compensation time length Ct corresponding to the deterministic flow data packet.

The scheduling control unit is configured to, based on the Ct, perform latency compensation and scheduling control on the deterministic flow data packet.

In an embodiment of the present disclosure, there is provided a system for transmitting a deterministic flow, including the ingress node of the deterministic flow in the deterministic network domain according to the first method, and the egress node of the deterministic flow in the determining network domain according to the second method.

In an embodiment of the present disclosure, there is provided an electronic device, including a processor and a machine readable storage medium; where
the machine readable storage medium stores machine executable instructions executable by the processor;
the processor is configured to execute the machine executable instructions to perform any one of the above methods.

In an embodiment of the present disclosure, there is provided a machine readable storage medium storing machine executable instructions executable by a processor, where the machine executable instructions are executed by the processor to perform any one of the above methods.

From the above technical solutions, it can be seen that in the embodiments of the present disclosure, by making improvements on the ingress node and the egress node of the deterministic flow in the deterministic network domain, reliable transmission of CSQF-based wide area deterministic flow can be achieved.

Furthermore, in the embodiments of the present disclosure, coexistence of the deterministic flow and a best-effort flow (also referred to as best-effort traffic) can be achieved so as to realize full-service full-fusion of common network and common path.

### BRIEF DESCRIPTION OF THE DRAWINGS

The accompanying drawings herein which are incorporated in and constitute a part of the specification illustrate the embodiments of the present disclosure and serve to explain the principle of the present disclosure together with the specification.
FIG. 1 is a network scenario diagram illustrating coexistence of a deterministic flow and a best-effort flow according to an embodiment of the present disclosure.
FIG. 2 is a schematic diagram illustrating a deterministic network domain to which a deterministic flow is applied according to an embodiment of the present disclosure.
FIG. 3 is a structural diagram illustrating an ingress node according to an embodiment of the present disclosure.
FIG. 4 is a schematic diagram illustrating an Ingress Flow Mapping Table according to an embodiment of the present disclosure.
FIG. 5 is a schematic diagram illustrating an elastic buffer queue according to an embodiment of the present disclosure.
FIG. 6 is a schematic diagram illustrating a first deterministic flow multicast table according to an embodiment of the present disclosure.
FIG. 7 is a schematic diagram illustrating specific implementation of an ingress node structure according to an embodiment of the present disclosure.
FIG. 8 is a schematic diagram illustrating a second deterministic flow multicast table according to an embodiment of the present disclosure.
FIG. 9 is a schematic diagram illustrating a Schedule operation and a Distribute operation according to an embodiment of the present disclosure.
FIG. 10 is a schematic diagram illustrating a resource registering table according to an embodiment of the present disclosure.
FIG. 11 is a structural schematic diagram illustrating an output interface unit according to an embodiment of the present disclosure.
FIG. 12 is an improved structure diagram illustrating an ingress node according to an embodiment of the present disclosure.
FIG. 13 is a structural schematic diagram illustrating an egress node according to an embodiment of the present disclosure.
FIG. 14 is a structural schematic diagram illustrating an output interface unit in an egress node according to an embodiment of the present disclosure.
FIG. 15 is a schematic diagram illustrating a compensation information table according to an embodiment of the present disclosure.
FIG. 16 is a diagram illustrating a performing logic of a CCP unit according to an embodiment of the present disclosure.
FIG. 17 is a schematic diagram illustrating a PD according to an embodiment of the present disclosure.
FIG. 18 is a schematic diagram of distributing a PD to a corresponding buffer queue according to an embodiment of the present disclosure.
FIG. 19 is a schematic diagram illustrating a TVH according to an embodiment of the present disclosure.
FIGS. 20 to 21 are schematic diagrams illustrating a packet sequence number according to an embodiment of the present disclosure.
FIG. 22 is a structural schematic diagram illustrating an ingress node according to an embodiment of the present disclosure.
FIG. 23 is a structural schematic diagram illustrating an egress node according to an embodiment of the present disclosure.
FIG. 24 is a hardware structure diagram illustrating a network device according to an embodiment of the present disclosure.

### DETAILED DESCRIPTION OF THE EMBODIMENTS

Exemplary embodiments will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the present disclosure. Rather, they are merely examples of apparatuses and methods consistent with some aspects of the present disclosure as detailed in the appended claims.

The terms used in the present disclosure are for the purpose of describing particular examples only, and are not intended to limit the present disclosure. Terms determined by "a", "the" and "said" in their singular forms in the present disclosure are also intended to include plurality, unless clearly indicated otherwise in the context.

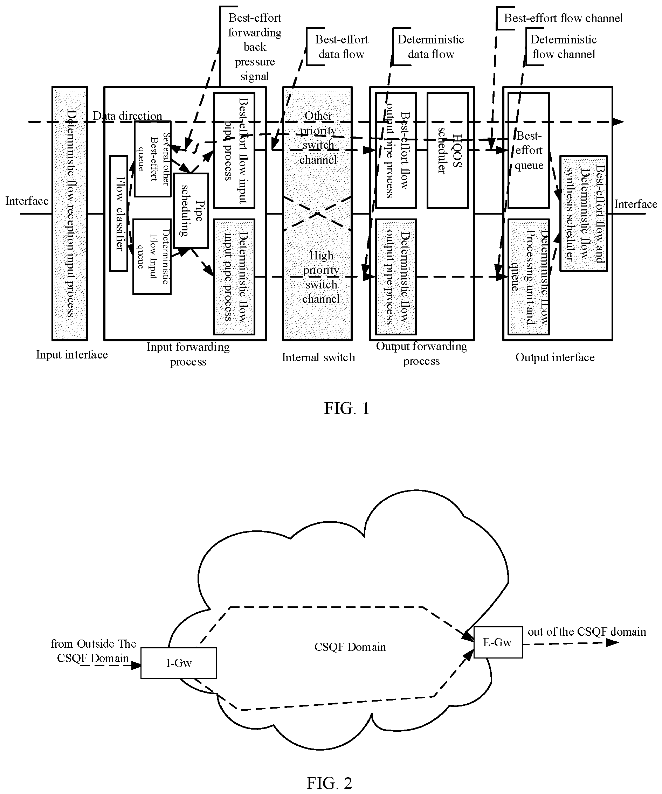

In a deterministic network domain, a deterministic flow and a best-effort flow require to coexist to adapt to mobility of 5G application and satisfy full-service full-fusion of the industry internet. Since Hierarchical Quality of Service (HQOS) scheduling of the existing best-effort flow is very complex, and chips and supportive software of the existing network processor (NP) are perfect, under the precondition of maintaining the independence and integrity of the HQOS scheduling of the existing best-effort flow, it is required to perform unified scheduling on the deterministic flow and the best-effort flow so as to achieve coexistence of the deterministic flow and the best-effort flow, helping to realize full-service full-fusion of common network and common path. As shown in FIG. 1, after an ingress node, for example, I-Gw, of a deterministic flow in a deterministic network domain receives the deterministic flow, an independent data pipe or passage is established in the present node to ensure the deterministic flow is free from impact of the best-effort flow.

As an embodiment, under the precondition of maintaining the coexistence of the deterministic flow and the best-effort flow, improvement is made on the ingress node, for example, I-Gw and an egress node, for example, Egress Gateway (E-Gw) of the deterministic flow in the deterministic network domain, so as to achieve reliable transmission of the deterministic flow. With the deterministic network domain as a Cycle Specified Queuing and Forwarding (CSQF) domain implemented based on segment routing, FIG. 2 illustrates the I-Gw is an ingress node of the deterministic flow in the CSQF domain, and the E-Gw is an egress node of the deterministic flow in the CSQF domain.

Improvement is firstly made below to the ingress node, i.e. I-Gw.

In this embodiment, the purpose of making improvement on the ingress node, for example, I-Gw of the deterministic flow in the deterministic network domain is to ensure the ingress node, for example, the I-Gw, after receiving a deterministic flow data packet, firstly determines an index number of an elastic buffer queue (also referred to as Elastic Queue, EQ for short) for buffering the deterministic flow data packet to buffer the received deterministic flow data packet into the EQ corresponding to the index number of the EQ; then, in a current scheduling cycle denoted as Cycle x, obtains a planned EQ resource of a next scheduling cycle Cycle (x+1) (the EQ resource at least includes an EQ index number and a planned transmission resource amount of the EQ corresponding to the EQ index number), obtains at least one deterministic flow data packet from the EQ corresponding to the obtained EQ index number (the transmission resource demand amount required by the obtained at least one deterministic flow data packet is less than or equal to the transmission resource amount), and stores the obtained at least one deterministic flow data packet into a physical queue corresponding to the next scheduling cycle Cycle (x+1) so as to schedule the deterministic flow data packet in the physical queue when the next scheduling cycle Cycle (x+1) arrives.

In this embodiment, the EQ index number in the planned EQ resource of the Cycle (x+1) and the determined index number of the EQ for buffering the received deterministic flow data packet may be same or different, which mainly depends on scheduling cycles. As an embodiment, each scheduling cycle has a corresponding EQ. In this case, for example, the index number of the EQ corresponding to the next scheduling cycle Cycle (x+1) is the determined index number of the EQ for buffering the received deterministic flow data packet. In this case, the EQ index number in the planned EQ resource of the Cycle (x+1) and the determined index number of the EQ for buffering the received deterministic flow data packet are same. For another example, the index number of the EQ corresponding to the next scheduling cycle Cycle (x+1) is not the determined index number of the EQ for buffering the received deterministic flow data packet, and in this case, the EQ index number in the planned EQ resource of the Cycle (x+1) and the determined index number of the EQ for buffering the received deterministic flow data packet are different.

In this embodiment, at least one deterministic flow data packet obtained from the EQ corresponding to the EQ index number in the EQ resource may include the received deterministic flow data packet, which mainly depends on scheduling cycles, the planned transmission resource amount of the EQ corresponding to the EQ index number in the EQ resource, and a buffering position of the received deterministic flow data packet in the EQ. For example, if the EQ index number in the planned EQ resource of the Cycle (x+1) and the determined index number of the EQ for buffering the received deterministic flow data packet are same, the transmission resource demand amount required by all deterministic flow data packets stored in the EQ corresponding to the EQ index number in the EQ resource is less than or equal to the transmission resource amount. In this case, at least one deterministic flow data packet obtained from the EQ corresponding to the EQ index number in the EQ resource may include the received deterministic flow data packet.

It is to be noted that in this embodiment, when the transmission resource demand amount required by all deterministic flow data packets stored in the EQ corresponding to the EQ index number in the EQ resource is greater than or equal to the transmission resource amount, the deterministic flow data packets are obtained from the EQ corresponding to the EQ index number in the EQ resource based on the transmission resource amount.

For example, based on the transmission resource amount, it is found that the transmission resource demand amount required by N deterministic flow data packets in the EQ corresponding to the EQ index number in the EQ resource is exactly equal to the transmission resource amount. Thus, the N deterministic flow data packets may be obtained, where the transmission resource demand amount required by the N deterministic flow data packets is exactly equal to the transmission resource amount.

For another example, based on the transmission resource amount, it is found that the transmission resource demand amount required by N deterministic flow data packets in the EQ corresponding to the EQ index number in the EQ resource is less than the transmission resource amount, and the transmission resource demand amount required by N+1 deterministic flow data packets is greater than the transmission resource amount. In this case, N deterministic flow data packets may be obtained from the EQ corresponding to the EQ index number in the EQ resource, where the transmission resource demand amount required by the obtained N deterministic flow data packets is less than the transmission resource amount.

It is further noted that, in this embodiment, when the transmission resource demand amount required by all deterministic flow data packets stored in the EQ corresponding to the EQ index number in the EQ resource is less than the transmission resource amount, all stored deterministic flow data packets may be obtained from the EQ corresponding to the EQ index number in the EQ resource, and in this case, the transmission resource demand amount required by the obtained deterministic flow data packets is less than the transmission resource amount.

Furthermore, in the above descriptions, the current scheduling cycle Cycle x and the next scheduling cycle Cycle (x+1) refer to scheduling cycles configured for the egress interface for transmitting the deterministic flow data packets on the present node.

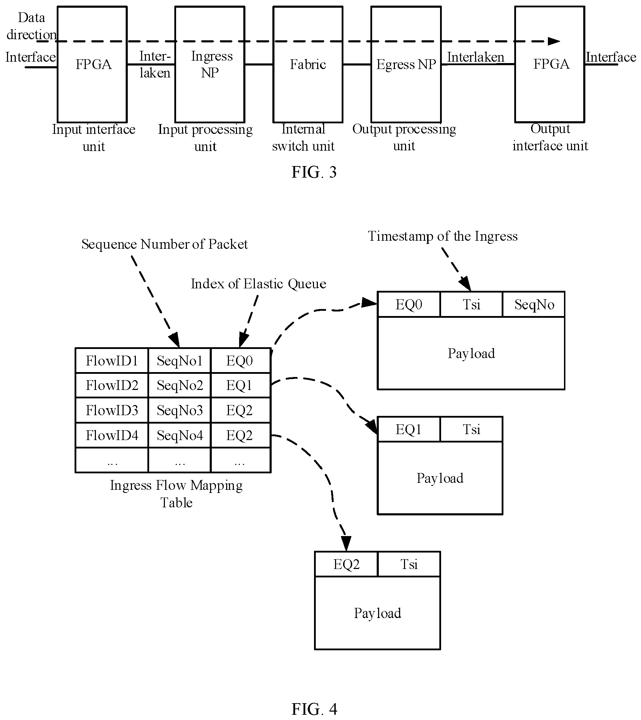

In order to achieve the above purpose, in this embodiment, improvement is made on each unit in an internal structure of the ingress node, for example, I-Gw by decomposing the internal structure of the ingress node, so as to achieve the above purpose. As shown in FIG. 3, the internal structure of the ingress node, for example, I-Gw mainly includes an input processing unit, an internal switch unit (also referred to as fabric), an output processing unit (also referred to as Egress), and an output interface unit (for example, EPGA). In this embodiment, the internal switch unit and the input/output processing units are connected with a switch chip to form an internal switch networked structure. As an embodiment, the input processing unit and the output processing unit can be implemented by NP, for example, the input processing unit may be referred to as IngressNP and the output processing unit may be referred to as Egress NP.

First of all, in this embodiment, the input processing unit of the ingress node, for example, I-Gw, will be improved as follows.

After the ingress node, for example, the I-Gw, of the deterministic flow data packet receives the deterministic flow data packet via an ingress interface, the input processing unit determines an index number of an EQ for buffering the deterministic flow data packet so that the output interface unit subsequently buffers the deterministic flow data packet into the EQ corresponding to the index number of the EQ. For details, reference may be made to the improvement of the output interface unit described below and no more descriptions are made herein.

As an embodiment, in order to help determine the EQ index number, an Ingress Flow Mapping Table may be established in advance. FIG. 4 illustrates an Ingress Flow Mapping Table. As shown in FIG. 4, the Ingress Flow Mapping Table mainly includes a deterministic flow identifier (FlowID), a packet sequence number, and an EQ index number. Initially, the packet sequence number in the Ingress Flow Mapping Table is a preset value, for example, 1. The Ingress Flow Mapping Table may be queried based on a deterministic flow identifier, e.g. IP quintuple, carried in the deterministic flow data packet to obtain a packet sequence number and an EQ index number corresponding to the deterministic flow identifier. The obtained EQ index number is the index number of the EQ for buffering the deterministic flow data packet. The obtained packet sequence number will be described below and no more description is made herein.

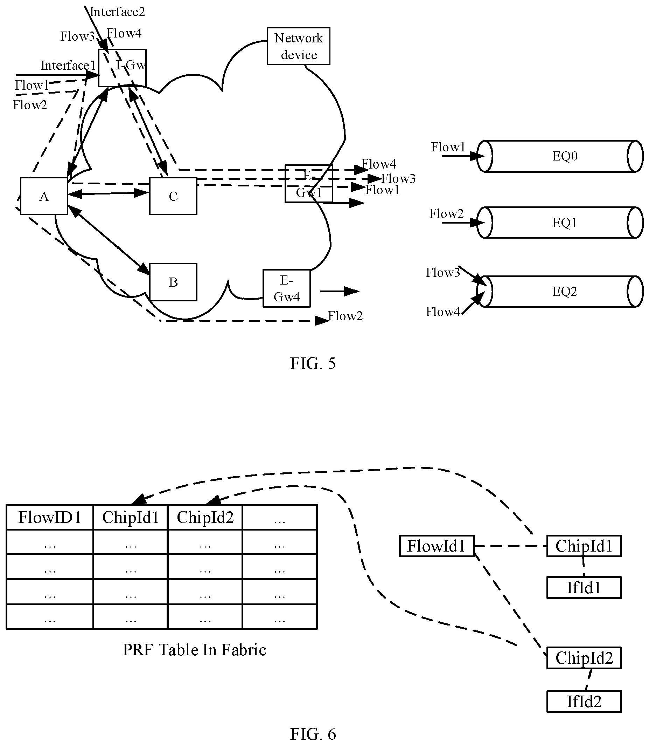

For example, for a deterministic flow data packet belonging to flow1, when the deterministic flow data packet is received at the ingress node, for example, I-Gw in the deterministic network domain, it may determine an index number of the EQ for buffering the deterministic flow data packet as EQ0 based on the Ingress Flow Mapping Table shown in FIG. 4, and subsequently further buffer the deterministic flow data packet into the EQ0. For a deterministic flow data packet belonging to flow2, when the deterministic flow data packet is received at the ingress node, for example, I-Gw in the deterministic network domain, it may determine an index number of the EQ for buffering the deterministic flow data packet as EQ1 based on the Ingress Flow Mapping Table shown in FIG. 4, and subsequently further buffer the deterministic flow data packet into the EQ1. For those deterministic flow data packets belonging to flow3 and flow4, the I-Gw inputs them via the same interface and the paths they pass through in the deterministic network domain are also same and thus they can share the elastic buffer queue EQ2 as shown in FIG. 5.

From the above FIG. 5, it can be seen that the data packets of different deterministic flows passing through different paths in the deterministic network domain are buffered in different EQs, and the data packets of different deterministic flows passing through a same path in the deterministic network domain are buffered in a same EQ.

As described above, the elastic buffer queues are organized based on equivalents of allocation resources (based on engineering application selection, for example, same path), for example, the data packets of different deterministic flows passing through a same path in the deterministic network domain are buffered in a same elastic buffer queue and the data packets of different deterministic flows passing through different paths in the deterministic network domain are buffered in different EQs. In this way, decoupling with the upstream input can be achieved, and further, association of such equivalent resources with the EQs can save the hardware implementation resource and also limit the jitter caused by subsequent scheduling and transmission of the deterministic flow data packet to a partial range, further providing guarantee for obtaining a reference latency described later (described below and not detailed herein).

It should be noted that in this embodiment, after the packet sequence number is obtained, the packet sequence number may be carried in the deterministic flow data packet and further, the packet sequence number corresponding to the identifier FlowID of the deterministic flow to which the deterministic flow data packet belongs in the Ingress Flow Mapping Table may be updated (for example, increase by a set value 1 or the like, which is not limited herein). Carrying the packet sequence number in the deterministic flow data packet is to help an egress node, for example, E-Gw of the deterministic flow data packet in the deterministic network domain to perform packet duplication deletion and sorting, which will be described below.

Next, in this embodiment, the internal switch unit of the ingress node, for example, I-Gw is improved below.

In this embodiment, the internal switch unit is provided with an additional packet replication function (PRF). When the deterministic flow data packet carries a multicast group identifier, a corresponding multicast entry (denoted as first multicast entry) may be queried for in the established deterministic flow multicast table (denoted as first deterministic flow multicast table) exemplified in FIG. 6. If the first multicast entry includes two or more target output processing units (represented by a chip identifier ChipId), the deterministic flow data packet is replicated, where the number of the replicated deterministic flow data packets is the number of the target output processing units. Then, the replicated deterministic flow data packets are sent to the target output processing units.

It can be seen that, when the deterministic flow data packet is a multicast packet and the multicast entry corresponding to the deterministic flow data packet includes a plurality of target output processing units, packet replication is to be performed in the internal switch unit where the number of the replicated deterministic flow data packets is the number of the target output processing units. By use of the efficient packet replication performance of the internal switch unit, for example, the switch chip, the replication of the deterministic flow data packet is completed by the internal switch unit, for example, the switch chip before the packet enters the output processing units, thereby greatly reducing internal processing latency and jitter.

Next, in this embodiment, the output processing unit of the ingress node, for example, I-Gw is improved below.

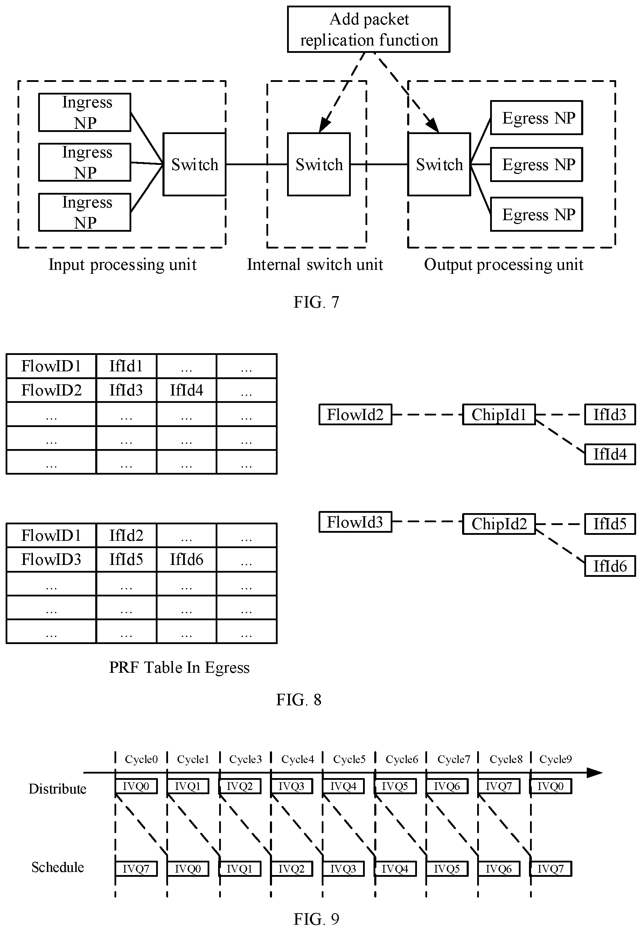

Like the internal switch unit, the output processing unit in this embodiment is provided with an additional PRF. FIG. 7 illustrates a structure of an output processing unit. The PRF is integrated into the switch unit, for example, the switch chip in the output processing unit exemplified in FIG. 7. When the deterministic flow data packet is sent via a plurality of egress interfaces attached to a same output processing unit, it is required to perform packet replication in the output processing unit, where the number of the replicated deterministic flow data packets is equal to the number of the egress interfaces.

Specifically, the output processing unit may include three components: a data packet replicating unit (implemented by a switch chip), an output processing pipe (implemented by the Egress NP shown in FIG. 7), and a flow management unit (implemented by the Egress NP shown in FIG. 7).

When detecting a multicast group identifier carried in the deterministic flow data packet, the data packet replicating unit may query for a corresponding multicast entry (denoted as a second multicast entry) in the established deterministic flow multicast table (denoted as a second deterministic flow multicast table) exemplified in FIG. 8. If the second multicast entry includes at least one target output interface (represented by an interface identifier IfId), the deterministic flow data packet is replicated, where the number of the replicated deterministic flow data packets is the number of the target output interfaces. Next, the replicated deterministic flow data packets are sent to the output processing pipe corresponding to the target output interface.

Based on the identifier of the deterministic flow to which the received deterministic flow data packet belongs, for example, IP quintuple, and the target egress interface sending the deterministic flow data packet, the output processing pipe obtains a corresponding deterministic flow information entry from a local deterministic flow information table. The deterministic flow information entry at least includes transmission information, the transmission information at least includes information of a transmission path of the deterministic flow data packet and a segment routing identifier (SID), and the SID includes scheduling cycle information for scheduling the deterministic flow data packet for each node in the transmission path; The transmission information in the deterministic flow information entry is encapsulated into the deterministic flow data packet and then the packet is sent to the flow management unit corresponding to the target egress interface, such that the flow management unit sends the deterministic flow data packet to the output interface unit corresponding to the target egress interface.

It is noted that if the deterministic flow data packet is a unicast packet, the PRF of the internal switch unit and the output processing unit may not be enabled.

Finally, in this embodiment, the output interface unit of the ingress node, for example, I-Gw is improved below.

After receiving the deterministic flow data packet, the output interface unit, based on the EQ index number carried in the deterministic flow data packet, buffers the deterministic flow data packet into the EQ corresponding to the EQ index number and then schedules the deterministic flow data packet to a corresponding physical queue, so as to schedule and transmit the deterministic flow data packet when the scheduling cycle corresponding to the physical queue arrives.

As an embodiment, if the current scheduling cycle is Cycle x, a planned EQ resource of a next scheduling cycle Cycle (x+1) is obtained in the current scheduling cycle Cycle x, where the EQ resource at least includes: an EQ index number and a planned transmission resource amount of the EQ corresponding to the EQ index number; at least one deterministic flow data packet is obtained from the EQ corresponding to the obtained EQ index number, where a transmission resource demand amount required for obtaining at least one deterministic flow data packet is less than or equal to the transmission resource amount; the obtained at least one deterministic flow data packet is stored into a physical queue corresponding to the next scheduling cycle Cycle (x+1) so as to schedule the deterministic flow data packet in the physical queue when the next scheduling cycle Cycle (x+1) arrives.

It can be seen that, in this embodiment, distributing the deterministic flow data packet to the physical queue (denoted as a Distribute operation) is performed based on scheduling cycles, and scheduling and transmitting the deterministic flow data packet in the physical queue (denoted as a Schedule operation) is also performed based on scheduling cycles but the schedule operation is performed one cycle earlier than the Distribute operation as shown in FIG. 9. Based on this principle, under the control of the scheduling cycle, the actual number of the physical queues is usually 2, that is, the received deterministic flow data packet will be finally stored in one of the two physical queues.

In this embodiment, the currently scheduled physical queue in the current scheduling cycle Cycle x is different from the physical queue corresponding to the next scheduling cycle Cycle (x+1).

As an embodiment, in order to help obtain the planned EQ resource of the next scheduling cycle Cycle (x+1), a resource registering table (RRT) is introduced in the output interface unit in this embodiment. In this embodiment, the number of the entries in the resource registering table is an integral multiple of the number of the virtual cycle queues (VCQ) corresponding to the scheduling cycles of the ingress node, for example, I-Gw. For example, 8 scheduling cycles are configured for the ingress node, and each scheduling cycle corresponds to one VCQ. Thus, the number of the entries in the resource registering table is an integral multiple of 8, for example, 8, 16, 32 ... and so on.

Furthermore, in this embodiment, each entry in the resource registering table is in correspondence with the scheduling cycle. When the number of the entries in the resource registering table is equal to the number of the VCQs corresponding to the scheduling cycles on the ingress node, for example, I-Gw, each entry corresponds to one scheduling cycle. For example, if the number of the entries in the resource registering table is 8, and 8 scheduling cycles are configured for the ingress node, the first entry may, based on an order, be enabled to correspond to the first scheduling cycle and so on.

When the number of the entries in the resource registering table is N multiples (N is greater than 1) of the number of the VCQs corresponding to the scheduling cycles of the ingress node, for example, I-Gw, each scheduling cycle may correspond to two or more entries. For example, the number of the entries in the resource registering table is 16, and 8 scheduling cycles are configured for the ingress node, the first entry may, based on an order, be enabled to correspond to the first scheduling cycle, and so on until the 9th scheduling cycle. In this case, the 9th scheduling cycle is enabled to correspond to the first scheduling cycle and so on.

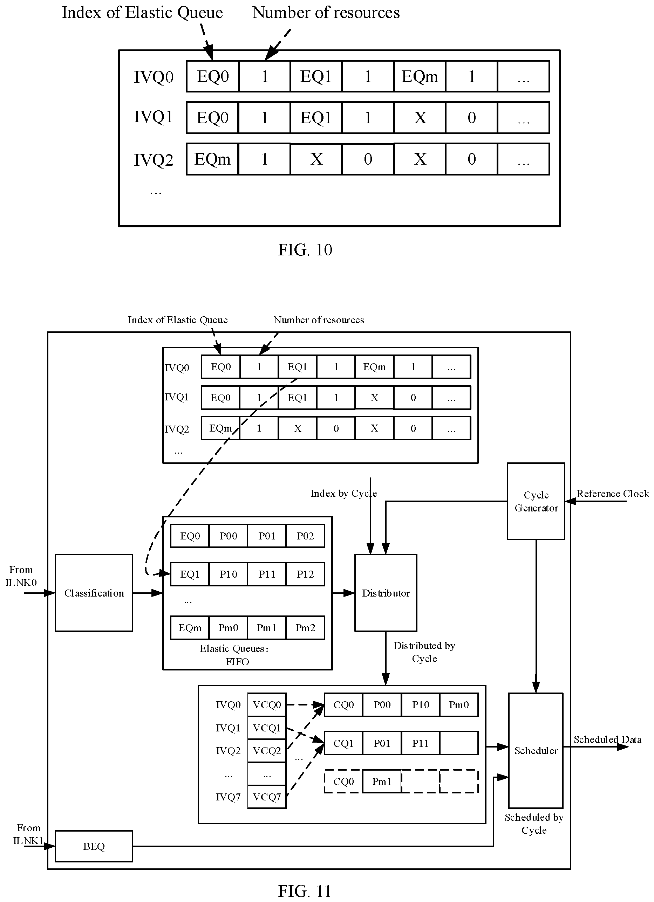

FIG. 10 illustrates the resource registering table.

As shown in FIG. 10, each entry in the resource registering table includes an EQ index number and a planned transmission resource amount of the EQ corresponding to the EQ index number. The unit of the transmission resource amount may be a specified number L of bytes, for example, L is 64 or the like, which is not limited herein. In addition, as shown in FIG. 10, each entry in the resource registering table is configured with a corresponding Index Virtual Queue (IVQ) which is used to indicate a VCQ.

Based on the resource registering table, the specific implementation of the output interface unit is described below.

Specifically, the output interface unit mainly includes a classifier (Classification), a distributor and a scheduler. FIG. 11 illustrates a structure of the output interface unit.

After receiving the deterministic flow data packet, the classifier, based on the EQ index number carried in the deterministic flow data packet, buffers the deterministic flow data packet into the EQ corresponding to the EQ index number.

The distributor is configured to, under the control of the scheduling cycle, based on the resource registering table, distribute the deterministic flow data packet buffered in the EQ to one of the physical queues. For example, in the current scheduling cycle (denoted as Cycle x), the distributor reads an entry corresponding to a next scheduling cycle Cycle (x+1) in the resource registering table, where the read entry at least includes an EQ index number and a transmission resource amount corresponding to the EQ index number; obtains at least one deterministic flow data packet from the EQ corresponding to the EQ index number in the entry, where a transmission resource demand amount required by the obtained at least one deterministic flow data packet is less than or equal to the transmission resource amount in the entry; then, stores the obtained at least one deterministic flow data packet into a physical queue corresponding to the entry, where the physical queue corresponds to the VCQ indicated by the IVQ corresponding to the entry.

In this embodiment, if the number of the entries in the local resource registering table is TL, the number of VCQs is d, and the TL is an integral multiple of d, the first entry in the resource registering table corresponds to the first scheduling cycle and so on. Thus, a sequence number of the entry corresponding to the Cycle (x+1) is (x+1) mod TL, the corresponding IVQ configured for the entry corresponding to Cycle (x+1) is expressed in the following equation: (x+1) mod d; the sequence number of the VCQ indicated by the IVQ is (x+1) mod d, and the sequence number of the physical queue corresponding to the VCQ is: (x+1) mod 2. Correspondingly, the sequence number of the physical queue corresponding to the current scheduling cycle Cycle x is x mod 2.

The scheduler is to schedule the physical queues by turns periodically and joins the distributor to achieve mapping and forwarding scheduling from the virtual cycle queue to the physical queue. In the current scheduling cycle Cycle x, the scheduler schedules a physical queue with a serial number (sequence number) x mod 2. Specifically, the scheduler preferentially takes out the deterministic flow data packets from a current physical queue (e.g. a physical queue with a serial number/sequence number x mod 2) for sending; if all deterministic flow data packets in the current physical queue are sent out and the current scheduling cycle Cycle x has a remaining time, pre-determines whether the current remaining time can be used to send one data packet in a current best-effort flow queue (BEQ); if the current remaining time can be used to send one data packet in a current best-effort flow queue ((also referred to as Best-Effort Queue, BEQ for short), takes out one data packet from the current BEQ for sending and otherwise, waits for the next scheduling cycle Cycle (x+1).

The above descriptions are made to the improvement on the ingress node, for example, I-Gw.

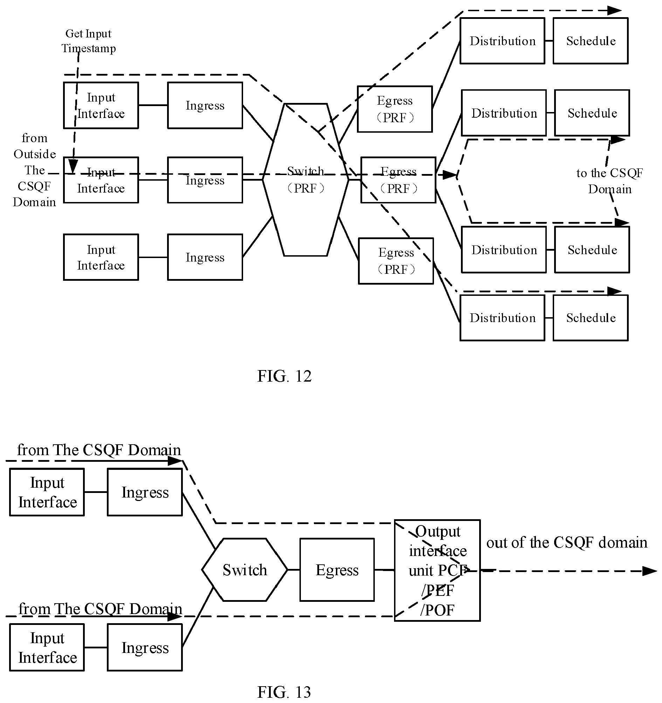

FIG. 12 illustrates a structure of the improved ingress node, for example, I-Gw. It is to be noted that, in this embodiment, the deterministic flow data packet transmitted by the ingress node, for example, I-Gw via the target output interface also carries a time parameter. The time parameter is used for an egress node of the deterministic flow data packet in the deterministic network domain to perform latency compensation on the deterministic flow data packet. For example, the time parameter is a timestamp when the ingress node, for example, I-Gw, receives the deterministic flow data packet via an ingress interface (also called reception timestamp, denoted as TSi), and so on, which will be described with examples and no more descriptions are made herein.

The improvement on the egress node, for example, E-Gw is described below.

As shown in FIG. 13, the egress node, for example, E-Gw receives a deterministic flow data packet from an interlaken channel0 and buffers it into a deterministic flow buffer queue (also referred to as deterministic flow queue or Deterministic Queue, DQ for short), and also receives a best-effort flow data packet and buffers it into a best-effort flow queue. The deterministic flow queue DQ serving as a high priority queue and the best-effort flow queue BEQ serving as a low priority queue are subjected to strict priority scheduling by SP.

As an embodiment, the improvement on the egress node, for example, E-Gw is mainly to achieve the followings: the egress node, for example, E-Gw receives and buffers a deterministic flow data packet; and based on a current timestamp TSc and the time parameter carried in the deterministic flow data packet, determines a compensation time length (denoted as Ct) corresponding to the deterministic flow data packet; and based on the Ct, performs latency compensation and scheduling control on the deterministic flow data packet.

In order to achieve the above purpose, improvement is made on each unit in an internal structure of the egress node, for example, E-Gw, by decomposing the internal structure. As shown in FIG. 13, the egress node, for example, E-Gw mainly includes an input processing unit, an internal switch unit, an output processing unit, and an output interface unit (e.g. FPGA). As an embodiment, the input processing unit and the output processing unit may be implemented by NP. For example, the input processing unit may also be referred to as IngressNP, and the output processing unit may also be referred to as Egress NP.

The improvement on the output interface unit in the egress node, for example, E-Gw, is described below.

In this embodiment, improvement is made to the output interface unit in the egress node, for example, E-Gw, such that the output interface unit achieves duplication deleting, sorting and latency compensation.

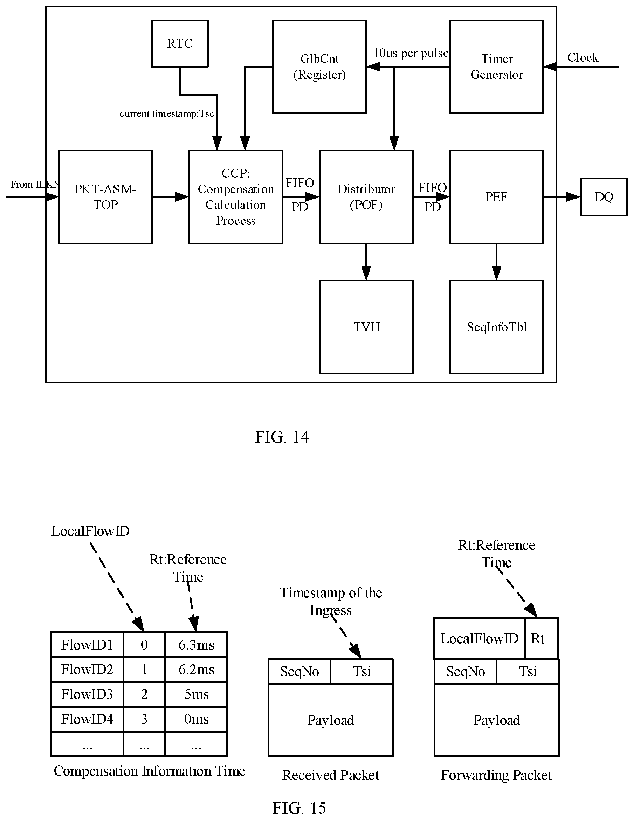

Specifically, the output interface unit may include a latency Compensation Calculation Process (CCP) unit, a distributor, and a Packet Elimination Functions (PEF) unit. FIG. 14 illustrates a structure of the output interface unit.

The CCP unit receives and buffers the deterministic flow data packet. Herein, a buffering position for currently buffering the deterministic flow data packet may be recorded.

Next, the CCP unit, based on the current timestamp TSc and the time parameter carried in the received deterministic flow data packet, determines the compensation time length Ct corresponding to the deterministic flow data packet.

As an embodiment, the time parameter is a timestamp TSi when the ingress node of the deterministic flow data packet in the deterministic network domain receives the deterministic flow data packet. In this case, it is further required to make improvement on the output processing unit in the egress node, for example, E-Gw, in this embodiment, such that the output processing unit receives the deterministic data flow packet earlier than the output interface unit and then determines a corresponding reference latency (also referred to as Reference Time, denoted as Rt), so as to perform subsequent latency compensation.

In order to help the output processing unit to determine the Rt, compensation information table (CIT) is introduced in the output processing unit in this embodiment. FIG. 15 illustrates the compensation information table. As shown in FIG. 15, each entry in the compensation information table at least includes a deterministic flow identifier ( (Flow ID, for example, IP quintuple identifier), a reference latency Rt (where 0 indicates no compensation for the flow), and a local flow serial number LocalFlowID (one integral serial number is allocated to each deterministic flow data packet reaching the present egress node, for example, E-Gw, such that the output interface unit performs duplication deleting and sorting).

Based on the compensation information table, the output processing unit may, based on the deterministic flow identifier, for example, IP quintuple, carried in the deterministic flow data packet, query the compensation information table, obtain a reference latency Rt and a local flow serial number LocalFlowID corresponding to the deterministic flow identifier FlowID from the compensation information table and take out a packet sequence number SeqNo carried in the deterministic flow data packet from the deterministic flow data packet. Next, the output processing unit forms the reference latency Rt, the LocalFlowID and the packet sequence number into meta data and delivers it together with the deterministic flow data packet to the output interface unit.

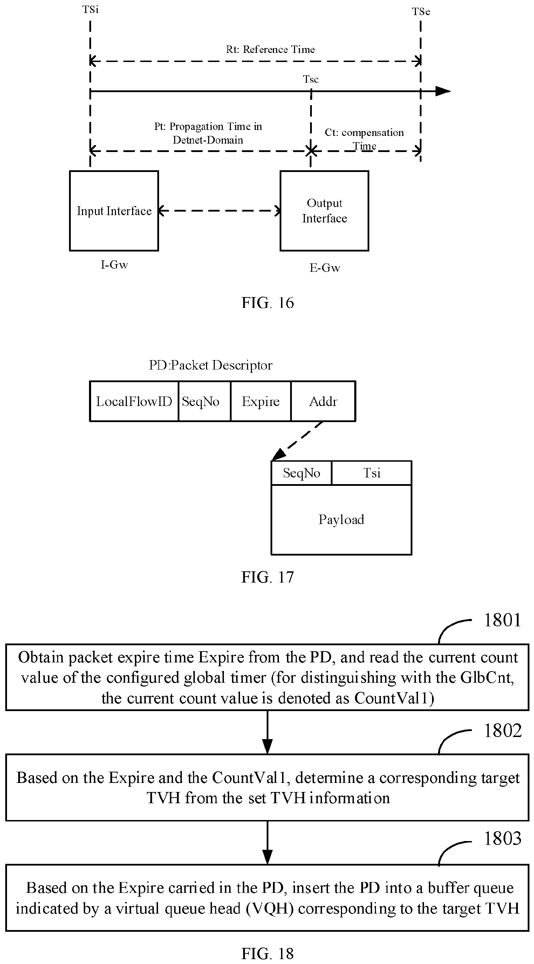

Based on the above, as shown in FIG. 16, the CCP unit in the output interface unit reads the current timestamp TSc, obtains the timestamp TSi from the currently received deterministic flow data packet and obtains the reference latency Rt from the received meta data, and then based on the TSc, the TSi and the Rt, calculates the compensation time length Ct. As an embodiment, Ct can be expressed in the following equation: Ct=TSe - TSc, where TSe =TSi + Rt.

As an embodiment, the time parameter is the TSi and the reference latency Rt. Specifically, the ingress node (the ingress node of the deterministic flow data packet in the deterministic network domain) performs the above operations of the output processing unit, i.e. obtains the reference latency Rt corresponding to the deterministic flow identifier FlowID carried in the deterministic flow data packet from the local compensation information table. In this case, the deterministic flow data packet may further carry the local flow serial number LocalFlowID. Thus, the CCP unit in the output interface unit reads the current timestamp TSc, obtains the TSi and the reference latency Rt from the currently received deterministic flow data packet, and based on the TSc, the TSi and the Rt, calculates the compensation time length Ct. As an embodiment, the Ct may be expressed in the following equation: Ct=TSe - TSc, where TSe =TSi + Rt.

As an embodiment, the time parameter may be an estimated timestamp TSe, where TSe =TSi + Rt. In this case, the deterministic flow data packet may further carry the local flow serial number LocalFlowID. Thus, the CCP unit in the output interface unit reads the current timestamp TSc, obtains TSe from the currently-received deterministic flow data packet, and based on the TSc and TSe, determines the compensation time length Ct. As an embodiment, the Ct may be expressed in the following equation: Ct=TSe - TSc.

Next, the CCP unit may join the distributor and the PEF unit to perform latency compensation and scheduling control on the deterministic flow data packet based on the Ct.

As an embodiment, the CCP unit, based on the Ct and the current count value GlbCnt of the configured global timer, determines count information (Expire) corresponding to a compensated packet sending time point, where the Expire is used to determine a storage position and a scheduling sequence of the deterministic flow data packet, which will be described below.

As an embodiment, the Expire may be expressed in the following equation: Expire = GlbCnt + Ct/T.

In the above equation, T is a cycle in which the global timer updates the count, for example, the global timer updates the count once every 10us. Herein, the T is 10us. Certainly, the T may also be set based on actual requirements.

Next, the CCP unit forms the Expire, the local flow identifier LocalFlowID, the packet sequence number SeqNo and the packet buffering position for buffering the deterministic flow data packet into a packet discriminator (PD), and sends the PD to a reception FIFO of the distributor, as shown in FIG. 17.

As an embodiment, the distributor, based on the Expire carried in the PD in the reception FIFO, distributes the PD to a corresponding buffer queue and joins the PEF unit to perform scheduling control on the deterministic flow data packet corresponding to the PD in the buffer queue.

In this embodiment, the distributor can, based on a set time vector header (TVH), achieve the step of distributing the PD to the corresponding buffer queue based on the Expire carried in the PD.

Specifically, as shown in FIG. 18, distributing the PD to the corresponding buffer queue based on the Expire carried in the PD may include the following steps.

At step 1801, the Expire is obtained from the PD, and the current count value of the configured global timer is read (for distinguishing with the GlbCnt, the current count value is denoted as CountVal1).

At step 1802, based on the Expire and the CountVal1, a corresponding target TVH is determined from the set TVH information.

As an embodiment, the entire TVH information only includes one TVH, and thus the target TVH is the one TVH in the TVH information.

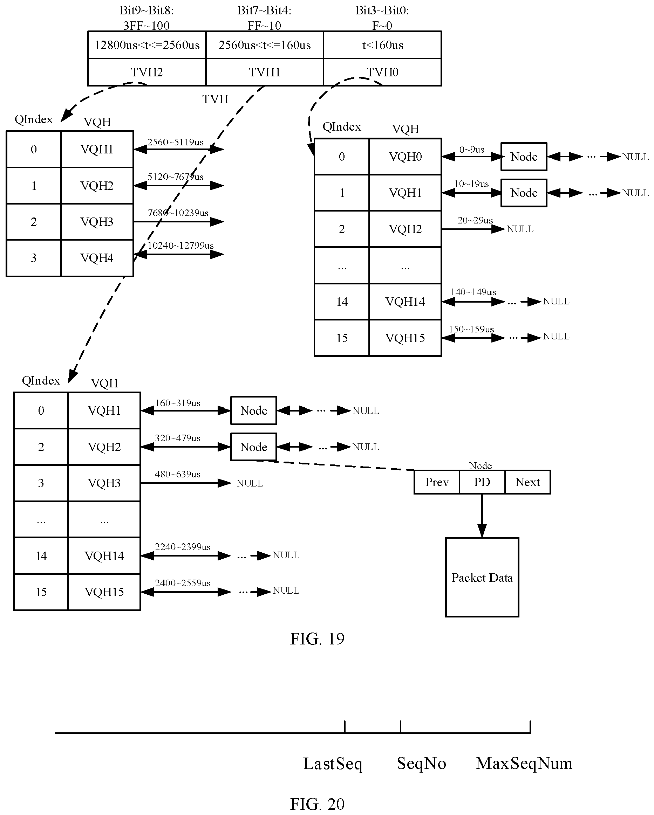

As an embodiment, the TVH information may include different TVHs, for example, TVH0 to TVH2 shown in FIG. 19. Thus, the Index may be firstly calculated in the following equation: Index = Expire - CountVal1 where CountVal1 refers to the current count value of the global timer. When the Index is less than a first value, for example, 16, the target TVH is determined as TVH0; when the Index is greater than or equal to the first value, for example, 16, and less than a second value, for example, 256, the target TVH is determined as TVH1; when the Index is greater than or equal to the second value, for example, 256, and less than a third value, for example, 1024, the target TVH is determined as TVH2.

At step 1803, based on the Expire carried in the PD, the PD is inserted into a buffer queue indicated by a virtual queue head (VQH) corresponding to the target TVH.

As an embodiment, it is assumed that the TVH information includes only one TVH, there are a plurality of VQHs under the one TVH, and each of the VQHs is configured with corresponding buffer queue. In this embodiment, a value m0 of bit0 to bit9 of the Expire may be firstly calculated and the PD is stored in the buffer queue indicated by VQHm0 under the one TVH.

As another embodiment, it is assumed that the TVH information includes different TVHs, there are a plurality of VQHs under each TVH, and each VQH is configured with corresponding buffer queue. In this embodiment, when the target TVH is TVH0, a value m1 of bit0 to bit3 (denoted as Expire[3:0]) of the Expire is calculated, where m1 is one value of 0 to 15; the PD is stored into the buffer queue indicated by VQHm1 under the TVH0. When the target TVH is TVH1, a value m2 of bit4 to bit7 (denoted as Expire[7:4]) of the Expire is calculated, where m2 is one value of 0 to 15; and the PD is stored into the buffer queue indicated by VQHm2 under the TVH1. When the target TVH is TVH2, a value m3 of bit8 to bit9 (denoted as Expire[9:8]) of the Expire is calculated, where m3 is one value of 0 to 3; and the PD is stored into the buffer queue indicated by VQHm3 under the TVH2.

Till now, the flow shown in FIG. 18 is completed. In the flow shown in FIG. 18, the procedure that the distributor, based on the Expire carried in the PD, inserts the PD into the buffer queue indicated by the VQH under the target TVH can be achieved finally.

It is to be noted that, in this embodiment, under each TVH, for example, the TVH0 in the TVH information, there are different VQHs for indicating buffer queues, and different VQHs indicate different buffer queues. For example, as shown in FIG. 19, under the TVH0 are VQH0 to VQH15, where the VQH0 indicates the buffer queue 1, and the VQH1 indicates the buffer queue 2, and so on.

As an embodiment, if the entire TVH information includes only one TVH, the time slots of the buffer queues indicated by the VQHs under the TVH are unified to a preset value, for example, 10us. In this case, the distributor may, based on a preset control cycle, for example, the time slot, perform scheduling control on the buffer queues indicated by the VQHs under the TVH. For example, in a first control cycle, scheduling control is performed on the buffer queue indicated by a first VQH, and in a second control cycle, scheduling control is performed on the buffer queue indicated by a second VQH, and so on. Specifically, for each control cycle (denoted as the current control cycle), in the current control cycle, a current buffer queue (e.g. if the current control cycle is the first control cycle, the current buffer queue is the buffer queue indicated by the first VQH) on which scheduling control is performed in the current control cycle is determined, and a PD is taken out from the current buffer queue. For each obtained PD, the PD is distributed to the specified FIFO (specifically, the reception FIFO of the PEF unit). Then, the PEF unit may perform scheduling control on the deterministic flow data packet corresponding to the PD in the specified FIFO. Descriptions will be made below on how to perform scheduling control on the deterministic flow data packet corresponding to the PD in the specified FIFO and no redundant descriptions are made herein.

As another embodiment, if the entire TVH information, for example, the TVH information shown in FIG.19, includes different TVHs, the time slots of the buffer queues indicated by the VQHs under different TVHs in the TVH information are different. For example, the larger the sequence number of the TVH (means the corresponding Expire is larger), the longer the time slot of the buffer queue indicated by each VQH under the TVH is. In this way, resource wastes can be avoided. As shown in FIG. 19, the time slot of the buffer queue indicated by each VQH under the TVH0 is 10us, the time slot of the buffer queue indicated by each VQH under the TVH1 is 160us, and the time slot of the buffer queue indicated by each VQH under the TVH2 is 2560us.

As an embodiment, when the entire TVH information includes different TVHs, performing scheduling control on the deterministic flow data packet corresponding to the PD in the buffer queue may include: based on a pulse trigger generated periodically by a configured Timer Generator, adjusting a storage position of the PD in the buffer queue; performing scheduling control on the deterministic flow data packet corresponding to the adjusted PD in the buffer queue.

As an embodiment, the above step of adjusting the storage position of the PD in the buffer queue can be implemented in several ways. For example, a current count value (for distinguishing from the GlbCnt and CountVal1 it is denoted as CountVa2) of the global timer is obtained, and based on the CountVa2, the index value Index is calculated. For example, the Index may be calculated in the following equation: Index= CountVal2[9:0], where CountVal2[9:0] represents a total value of bit0 to bit9 of the CountVa2.

If bit0 to bit3 (denoted as Index [3:0]) of the Index is 0, step *a* is performed and otherwise step c is performed.

At step *a*, a value n1 of bit4 to bit7 (denoted as Index [7:4]) of the Index is calculated, where n1 is a value of 0 to 15; the PD is taken out from the current buffer queue indicated by the VQHn1 under the TVH1; for each obtained PD, the flow shown in FIG. 18 is performed; then, if Index[4:7] is 0, step b is performed and otherwise, step c is performed.

At step b, a value n2 of bit8 to bit9 (denoted as Index [9:8]) of the Index is calculated, where n2 is a value of 0 to 3; the PD is taken out from the current buffer queue indicated by the VQHn2 under the TVH2; for each obtained PD, the flow shown in FIG. 18 is performed; then step c is performed.

At step c, a value n3 of bit0 (denoted as Index [3:0]) to bit3 of the Index is calculated, where n3 is a value of 0 to 15; the PD is taken out from the current buffer queue indicated by VQHn3 under the TVH0; for each obtained PD, the PD is distributed to the specified FIFO (specifically, the reception FIFO of the PEF unit). Finally, the PD in each buffer queue under the TVH is adjusted by the above steps.

Then, the PEF unit performs scheduling control on the deterministic flow data packet corresponding to the PD in the reception FIFO.

As an embodiment, the PEF unit takes out a current PD from the reception FIFO and reads a local flow identifier LocalFlowID and a packet sequence number SeqNo from the current PD, and based on the LocalFlowID, obtains LastSeqID and a configured maximum sequence number MaxSeqNum of the present deterministic flow from a local packet sequence table SeqInfoTbl. Herein, the packet sequence number SeqNo may be denoted as CurrentSeq. The LastSeqID represents a sequence number of the last-forwarded deterministic flow data packet belonging to the deterministic flow corresponding to the LocalFlowID.

In an application to the example shown in FIG. 20, if the SeqNo is greater than the LastSeq and a sequence number difference of the SeqNo and the LastSeq is less than or equal to a sequence number interval threshold (for example, 3, denoted as r), it is determined that the deterministic flow data packet corresponding to the current PD is legal, the deterministic flow data packet corresponding to the PD is stored into a deterministic flow queue DQ for scheduling and transmission, and the LastSeq in the SeqInfoTbl is updated to the SeqNo; or, if the SeqNo is less than the LastSeq, it is determined that the deterministic flow data packet corresponding to the PD is illegal, and the deterministic flow data packet is deleted from the buffer queue.

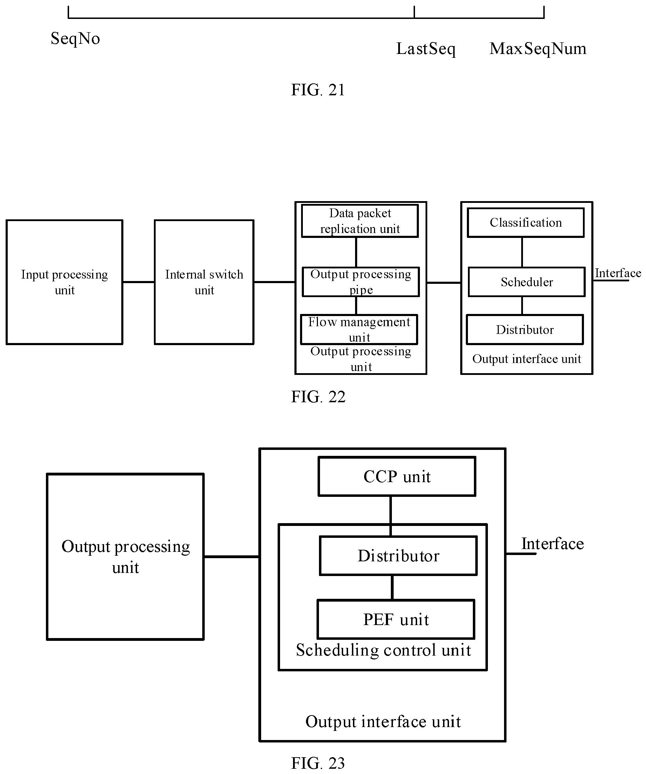

In an application to the example shown in FIG. 21, if the SeqNo is less than the LastSeq and a difference obtained by subtracting the LastSeq from a sum of the SeqNo and the MaxSeqNum is less than or equal to the sequence number interval threshold (for example, 3, denoted as r), for example, SeqNo+MaxSeqNum-LastSeq ≤ r, it is determined that the deterministic flow data packet corresponding to the current PD is legal, the deterministic flow data packet corresponding to the PD is stored into a deterministic flow queue DQ for scheduling and transmission, and the LastSeq in the SeqInfoTbl is updated to the SeqNo; or, if SeqNo+MaxSeqNum-LastSeq>r, it is determined that the deterministic flow data packet corresponding to the current PD is illegal, and the deterministic flow data packet is deleted from the buffer queue.

In this embodiment, the step of storing the deterministic flow data packet corresponding to the PD into the DQ for scheduling and transmission can be achieved in several ways. For example, compared with BEQ, the DQ is a high priority queue, and the deterministic flow data packet in the DQ can be scheduled preferentially.

The above descriptions are made on the improvement on the egress node, for example, E-Gw.

By use of improvement on the ingress node and the egress node, CSQF-based transmission of wide area deterministic flow can be achieved, which is applicable to a high-end device and a core network. In this way, coexistence of the deterministic flow and the best-effort flow can be achieved and full-service full fusion of common network and common path can be promoted. Further, the mature software and hardware in a forwarding system of the existing best-effort flow can be inherited, thus bringing good applicability.

An embodiment of the present disclosure further provides a system for transmitting a deterministic flow. The system includes the ingress node and the egress node as mentioned above. The structure of the ingress node and the egress node and the relevant operations performed are describe as above and thus no more descriptions are made herein.

In an embodiment of the present disclosure, there is provided an apparatus for transmitting a deterministic flow, which is applied to an ingress node of the deterministic flow in a deterministic network domain. As shown in FIG. 22, the apparatus includes:
an input processing unit, configured to receive a deterministic flow data packet and determine an index number of an elastic buffer queue (EQ) for buffering the deterministic flow data packet;
an output interface unit, configured to buffer the deterministic flow data packet in the EQ corresponding to the index number of the EQ; in a current scheduling cycle Cycle x, obtain a planned EQ resource of a next scheduling cycle Cycle (x+1), where the EQ resource at least includes: an EQ index number and a planned transmission resource amount of the EQ corresponding to the EQ index number; obtain at least one deterministic flow data packet from the EQ corresponding to the obtained EQ index number, where a transmission resource demand amount required by the obtained at least one deterministic flow data packet is less than or equal to the transmission resource amount; store the obtained at least one deterministic flow data packet into a physical queue corresponding to the next scheduling cycle Cycle (x+1) so as to schedule the deterministic flow data packet in the physical queue when the next scheduling cycle Cycle (x+1) arrives.

As an embodiment, determining the index number of the elastic buffer queue (EQ) for buffering the deterministic flow data packet includes:
based on a deterministic flow identifier carried in the deterministic flow data packet, querying an Ingress Flow Mapping Table, to obtain an EQ index number corresponding to the deterministic flow identifier from the Ingress Flow Mapping Table, and determining the obtained EQ index number as the index number of the EQ for buffering the deterministic flow data packet.

As an embodiment, the apparatus further includes: an internal switch unit and an output processing unit;
where the internal switch unit is configured to obtain a corresponding first multicast entry in an established first deterministic flow multicast table; if the first multicast entry includes two or more target output processing units, replicate the deterministic flow data packet, where a number of the replicated deterministic flow data packets is a number of the target output processing units; and send the replicated deterministic flow data packets to the target output processing units;
each output processing unit at least includes a data packet replicating unit, an output processing pipe and a flow management unit;
the data packet replicating unit is configured to obtain a corresponding second multicast entry in an established second deterministic flow multicast table; if the second multicast entry includes two or more target output interfaces, replicate the deterministic flow data packet, where a number of the replicated deterministic flow data packets is a number of the target output interfaces; and send the replicated deterministic flow data packets to the output processing pipes corresponding to the target output interface;
the output processing pipe, based on an identifier of the deterministic flow to which the received deterministic flow data packet belongs and the target egress interface sending the deterministic flow data packet, obtains a corresponding deterministic flow information entry in a local deterministic flow information table, and encapsulates transmission information in the deterministic flow information entry into the deterministic flow data packet and sends the deterministic flow data packet to the flow management unit corresponding to the target egress interface, such that the flow management unit sends the deterministic flow data packet to the output interface unit corresponding to the target egress interface; where the transmission information includes information of a transmission path of the deterministic flow data packet and a segment routing identifier (SID), and the SID includes scheduling cycle information for scheduling the deterministic flow data packet for each node in the transmission path.

As an embodiment, the output interface unit includes a classifier, a scheduler and a distributor.

The classifier is configured to buffer the deterministic flow data packet into the EQ corresponding to the EQ index number;
the scheduler is configured to, in a current scheduling cycle Cycle x, schedule the deterministic flow data packet in a physical queue corresponding to the current scheduling cycle Cycle x;
the distributor is configured to, when the scheduler schedules the deterministic flow data packet in the physical queue corresponding to the current scheduling cycle Cycle x in the current scheduling cycle Cycle x, obtain a planned EQ resource of a next scheduling cycle Cycle (x+1), where the EQ resource at least includes: an EQ index number and a planned transmission resource amount of the EQ corresponding to the EQ index number; obtain at least one deterministic flow data packet from the EQ corresponding to the obtained EQ index number, where a transmission resource demand amount required by the obtained at least one deterministic flow data packet is less than or equal to the transmission resource amount; store the obtained at least one deterministic flow data packet into a physical queue corresponding to the next scheduling cycle Cycle (x+1) so that the scheduler schedules and transmits the deterministic flow data packet in the physical queue when the next scheduling cycle Cycle (x+1) arrives.

As an embodiment, a currently scheduled physical queue in the current scheduling cycle Cycle x is different from the physical queue corresponding to the next scheduling cycle Cycle (x+1).

As an embodiment, obtaining the planned EQ resource of the next scheduling cycle Cycle (x+1) includes:
in the current scheduling cycle Cycle x, reading an entry corresponding to the next scheduling cycle Cycle (x+1) in a local resource registering table; where a number of the entries in the local resource registering table is an integral multiple of a number of virtual cycle queues (VCQ) corresponding scheduling cycles on a present node;
obtaining the planned EQ resource of the Cycle (x+1) from the entry corresponding to the Cycle (x+1).

As an embodiment, if the number of the entries in the local resource registering table is TL, the number of the VCQs is d, and the TL is an integral multiple of d,
a sequence number of the entry corresponding to the Cycle (x+1) is (x+1) mod TL, an IVQ of a corresponding virtual cycle queue configured for the entry corresponding to the Cycle (x+1) is (x+1) mod d, the physical queue corresponding to the next scheduling cycle Cycle (x+1) corresponds to a VCQ indicated by the IVQ, and a sequence number of the physical queue corresponding to the next scheduling cycle Cycle (x+1) is (x+1) mod 2;
a sequence number of the physical queue corresponding to the current scheduling cycle Cycle x is x mod 2.

As an embodiment, the deterministic flow data packet scheduled and transmitted in the physical queue at least carries a packet sequence number and a time parameter;
where the time parameter is used for performing latency compensation on the deterministic flow data packet by an egress node of the deterministic flow data packet in the deterministic network domain; the packet sequence number is a locally-recorded sequence number of a packet in the deterministic flow to which the deterministic flow data packet belongs;
when the deterministic flow data packet in the physical queue is scheduled and transmitted, the output interface unit further: increases, by a set value, the locally-recorded sequence number of the packet in the deterministic flow to which the deterministic flow data packet belongs.

An embodiment of the present disclosure further provides a structural diagram of another apparatus shown in FIG. 23. The apparatus is applied to an egress node of the deterministic flow data packet in a deterministic network domain. As shown in FIG. 23, the apparatus includes an output interface unit;
where the output interface unit at least includes a latency compensation calculation processing (CCP) unit and a scheduling control unit;
the CCP unit is configured to receive and buffer a deterministic flow data packet, and based on a current timestamp TSc and a time parameter carried in the deterministic flow data packet, determine a compensation time length Ct corresponding to the deterministic flow data packet;
the scheduling control unit is configured to, based on the Ct, perform latency compensation and scheduling control on the deterministic flow data packet.

As an embodiment, the time parameter is a timestamp TSi when an ingress node of the deterministic flow data packet in the deterministic network domain receives the deterministic flow data packet;
the apparatus further comprises an output processing unit;
the output processing unit is configured to, after receiving the deterministic flow data packet earlier than the output interface unit, determine a reference latency Rt of the deterministic flow data packet;
the CCP unit is configured to, based on the Rt, the TSc and the TSi, determine the compensation time length Ct.

As an embodiment, the time parameter is the reference latency Rt and the TSi;
the CCP unit is configured to, based on the Rt, the TSc and the TSi, determine the compensation time length Ct.

As an embodiment, the time parameter is an estimated timestamp TSe, where TSe =TSi + Rt;
the CCP unit is configured to, based on the TSc and the TSe, determine the compensation time length Ct.

As an embodiment, determining the reference latency Rt corresponding to the deterministic flow data packet includes: based on a deterministic flow identifier carried in the deterministic flow data packet, querying a local compensation information table, obtaining a reference latency Rt corresponding to the deterministic flow identifier from the compensation information table, and determining the obtained reference latency Rt as the reference latency Rt corresponding to the deterministic flow data packet.

As an embodiment, based on the Rt, the TSc and the TSi, determining the compensation time length Ct includes: calculating the Ct in the following equation: Ct=TSe - TSc; where TSe =TSi + Rt.

As an embodiment, based on the TSc and the TSe, determining the compensation time length Ct includes: calculating the Ct in the following equation: Ct=TSe - TSc.

As an embodiment, the scheduling control unit at least includes: a distributor and a Packet Elimination Functions (PEF) unit;
the distributor is configured to, based on an Expire carried in a packet discriminator PD corresponding to the deterministic flow data packet, distribute the PD to the corresponding buffer queue; where the PD corresponding to the deterministic flow data packet at least carries the Expire, a local flow identifier LocalFlowID, a packet sequence number SeqNo carried in the deterministic flow data packet, and a packet buffering position for currently buffering the deterministic flow data packet, all of which are formed into the PD corresponding to the deterministic flow data packet; the Expire is count information corresponding to a compensated packet sending time point determined based on the compensation time length Ct and a current count value GlbCnt of a configured global timer; and the local flow identifier LocalFlowID is a locally-recorded identifier or the deterministic flow identifier carried in the deterministic flow data packet;
the PEF unit is configured to perform scheduling control on the deterministic flow data packet corresponding to the PD in the buffer queue.

As an embodiment, the Expire is expressed in the following equation: Expire = GlbCnt + Ct/T; T is a cycle for the global timer to update count.

As an embodiment, the distributor distributes the PD to the corresponding buffer queue based on the Expire carried in the PD, which includes:
reading a current count value CountVal1 of the global timer;
based on the Expire carried in the PD and the current count value CountVal1 of the global timer, determining a corresponding target time vector header (TVH) from set TVH information;
based on the Expire carried in the PD, inserting the PD into a buffer queue indicated by a virtual queue header (VQH) corresponding to the target TVH.

As an embodiment, the TVH information includes one TVH;
determining the corresponding target TVH from the set TVH information includes: determining the one TVH included in the TVH information as the target TVH;
based on the Expire carried in the PD, inserting the PD into the buffer queue indicated by the VQH corresponding to the target TVH includes: calculating a value m0 of bit 0 to bit9 of the Expire, and storing the PD into the buffer queue indicated by VQHm0 under the one TVH.

As an embodiment, the buffer queue indicated by each VQH under the target TVH is schedule-controlled based on a control cycle;
performing scheduling control on the deterministic flow data packet corresponding to the PD in the buffer queue includes:
in a current control cycle, determining a current buffer queue schedule-controlled in the current control cycle;
obtaining the PD from the current buffer queue; for each obtained PD, distributing the PD to a specified FIFO, and performing scheduling control on the deterministic flow data packet corresponding to the PD in the specified FIFO.

As an embodiment, the TVH information includes different TVHs;
determining the corresponding target TVH from the set TVH information includes:
calculating an Index in the following equation: Index = Expire - CountVal1 where CountVal1 indicates a current count value of the global timer;
when the Index is less than a first value, determining TVH0 as the target TVH; when the Index is greater than or equal to the first value, and less than a second value, determining TVH1 as the target TVH; when the Index is greater than or equal to the second value, and less than a third value, determining TVH2 as the target TVH.

As an embodiment, based on the Expire carried in the PD, inserting the PD into the buffer queue indicated by the VQH corresponding to the target TVH includes:
when the target TVH is the TVH0, calculating a value m1 of bit0 to bit3 of the Expire, where m1 is one value of 0 to 15; and storing the PD into the buffer queue indicated by VQHm1 under the TVH0;
when the target TVH is the TVH1, calculating a value m2 of bit4 to bit7 of the Expire, where m2 is one value of 0 to 15; and storing the PD into the buffer queue indicated by VQHm2 under the TVH1;
when the target TVH is the TVH2, calculating a value m3 of bit8 to bit9 of the Expire, wherein m3 is one value of 0 to 3; and storing the PD into the buffer queue indicated by VQHm3 under the TVH2.

As an embodiment, performing scheduling control on the deterministic flow data packet corresponding to the PD in the buffer queue includes:
based on a pulse trigger generated periodically by a configured Timer Generator, adjusting a storage position of the PD in the buffer queue;
performing scheduling control on the deterministic flow data packet corresponding to the adjusted PD in the buffer queue.

As an embodiment, based on the pulse trigger generated periodically by the configured Timer Generator, adjusting the storage position of the PD in the buffer queue includes:
when monitoring the pulse trigger, obtaining a current count value CountVa2 of the global timer, and based on the CountVa2, calculating an index value Index; where Index= CountVal2[9:0], and CountVal2[9:0] represents a value indicated by bit0 to bit9 of the CountVa2;
if the bit0 to bit3 of the Index is 0, performing step *a* and otherwise performing step c;
at step *a*, calculating a value n1 of the bit4 to bit7 of the Index, where n1 is a value of 0 to 15; taking out the PD from the current buffer queue indicated by VQHn1 under the TVH1; for each obtained PD, performing the step of distributing the PD to the corresponding buffer queue based on the Expire carried in the PD; after, for each PD in the current buffer queue, performing the step of distributing the PD to the corresponding buffer queue based on the Expire carried in the PD, if the value n1 of the bit4 to bit7 of the Index is 0, performing step *b;* if the value n1 of the bit4 to bit7 of the Index is not 0, performing step *c;*
at step *b,* calculating a value n2 of bit8 to bit9 of the Index, where n2 is a value of 0 to 3; taking out the PD from the current buffer queue indicated by VQHn2 under the TVH2; for each obtained PD, performing the step of distributing the PD to the corresponding buffer queue based on the Expire carried in the PD; after, for each PD in the current buffer queue, performing the step of distributing the PD to the corresponding buffer queue based on the Expire carried in the PD, performing step *c;*
at step *c,* calculating a value n3 of the bit0 to bit3 of the Index, where n3 is a value of 0 to 15; taking out the PD from the current buffer queue indicated by VQHn3 under the TVH0; and distributing each obtained PD to the specified FIFO;
performing scheduling control on the deterministic flow data packet corresponding to the adjusted PD in the buffer queue includes: performing scheduling control on the deterministic flow data packet corresponding to the PD in the specified FIFO.

As an embodiment, performing scheduling control on the deterministic flow data packet corresponding to the PD in the specified FIFO includes:
for each PD in the specified FIFO, obtaining the local flow identifier LocalFlowID and the packet sequence number SeqNo from the PD;
based on the LocalFlowID, obtaining LastSeqID and a configured maximum sequence number MaxSeqNum of the present deterministic flow from a local packet sequence table SeqInfoTbl; where LastSeqID represents a sequence number of the last-forwarded deterministic flow data packet belonging to the deterministic flow corresponding to the LocalFlowID;
if the SeqNo is greater than the LastSeq and a sequence number difference of the SeqNo and the LastSeq is less than or equal to a sequence number interval threshold, or if the SeqNo is less than the LastSeq and a difference obtained by subtracting the LastSeq from a sum of the SeqNo and the MaxSeqNum is less than or equal to the sequence number interval threshold, determining the deterministic flow data packet corresponding to the PD is legal, and storing the deterministic flow data packet corresponding to the PD into a deterministic flow queue DQ for scheduling and transmission, and updating the LastSeq in the SeqInfoTbl to the SeqNo, and otherwise, determining the deterministic flow data packet corresponding to the PD is illegal, and deleting the deterministic flow data packet from the buffer queue.

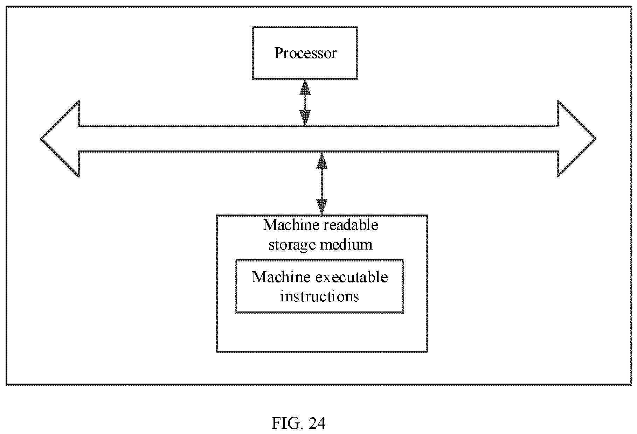

An embodiment of the present disclosure further provides a hardware structure of the apparatus shown in FIG. 22 or 23. As shown in FIG. 24, it is a structural diagram of an electronic device according to an embodiment of the present disclosure. As shown in FIG. 24, the hardware structure may include a processor and a machine readable storage medium, where the machine readable storage medium stores machine executable instructions executable by the processor, and the processor is configured to execute the machine executable instructions to perform the method as described in the above embodiments.

Based on the same application idea as the above method, an embodiment of the present disclosure further provides a machine readable storage medium storing several computer instructions, where the computer instructions are executed by a processor to perform the method as described in the above embodiments.

Illustratively, the machine readable storage medium mentioned herein may be any of electronic, magnetic, optical or other physical storage devices and may contain or store information such as executable instructions, data and so on. For example, the machine readable storage medium may be a Radom Access Memory (RAM), a volatile or non-volatile memory, a flash memory, a storage drive (e.g. hard disk drive), a solid state hard disk, any type of storage disk (e.g., compact disk, Digital Video Disk (DVD)), or a similar storage medium, or a combination thereof.

The systems, apparatuses, modules or units described in the above examples may be specifically implemented by a computer chip or an entity or may be implemented by a product with a particular function. A typical implementing device may be a computer and the computer may be specifically a personal computer, a laptop computer, a cellular phone, a camera phone, a smart phone, a personal digital assistant, a media player, a navigation device, an email transceiver, a game console, a tablet computer, a wearable device, or a combination of any several devices of the above devices.

For convenience of description, the above apparatus is divided into different units based on functionality for descriptions. Of course, the functions of different units may be implemented in a same or a plurality of hardware and/or software when practicing the present disclosure.

The persons skilled in the art should understand that the examples of the present disclosure may be provided as a method, a system, or a computer program product. Thus, entire hardware examples, entire software examples or examples combining software and hardware may be adopted in the present disclosure. Further, the present disclosure may be implemented in the form of a computer program product that is operated on one or more computer available storage media (including but not limited to magnetic disk memory, CD-ROM, and optical memory and so on) including computer available program codes.

The present disclosure is described by referring to flowcharts and/or block diagrams of a method, a device (a system) and a computer program product in the examples of the present disclosure. It is understood that each flowchart and/or block in the flowcharts and/or the block diagrams or a combination of a flow chart and/or a block of the flowcharts and/or the block diagrams may be implemented by computer program instructions. These computer program instructions may be provided to a general-purpose computer, a dedicated computer, an embedded processor, or a processor of another programmable data processing device to generate a machine so that the instructions executable by a computer or a processor of another programmable data processing device generate an apparatus for implementing functions designated in one or more flows of the flowcharts and/or one or more blocks of the block diagrams.

Further, these computer program instructions may also be stored in a computer readable memory that can direct a computer or another programmable data processing device to work in a particular manner so that the instructions stored in the computer readable memory generate a product including an instruction apparatus and the instruction apparatus can implement functions designated in one or more flows of the flowcharts and/or one or more blocks of the block diagrams.

The computer program instructions may also be loaded on a computer or another programmable data processing device, so that a series of operation steps can be executed on the computer or another programmable device to generate processing achieved by the computer, and thus instructions executable on the computer or another programmable device are provided for steps for realizing functions designated in one or more flows of the flowcharts and/or one or more blocks of the block diagrams.

The above descriptions are only made to some examples of the present disclosure, and are not used to limit the present disclosure. For those skilled in the art, the present disclosure may have various changes and modifications. Any modifications, equivalent replacements, improvements, etc. made in the spirit and principle of this present disclosure shall fall within the scope of claims of the present disclosure.

## Claims

1. A method of transmitting a deterministic flow, applied to an ingress node of the deterministic flow in a deterministic network domain and comprising:
receiving a deterministic flow data packet;
determining an index number of an elastic buffer queue, EQ, for buffering the deterministic flow data packet and buffering the deterministic flow data packet in the EQ corresponding to the index number of the EQ;
in a current scheduling cycle Cycle x, obtaining a planned EQ resource of a next scheduling cycle Cycle (x+1), wherein the EQ resource at least comprises: an EQ index number and a planned transmission resource amount of the EQ corresponding to the EQ index number; obtaining at least one deterministic flow data packet from the EQ corresponding to the obtained EQ index number, wherein a transmission resource demand amount required by the obtained at least one deterministic flow data packet is less than or equal to the transmission resource amount; storing the obtained at least one deterministic flow data packet into a physical queue corresponding to the next scheduling cycle Cycle (x+1) so as to schedule the deterministic flow data packet in the physical queue when the next scheduling cycle Cycle (x+1) arrives.

2. The method of claim 1, wherein determining the index number of the elastic buffer queue, EQ, for buffering the deterministic flow data packet comprises:
based on a deterministic flow identifier carried in the deterministic flow data packet, querying an Ingress Flow Mapping Table to obtain an EQ index number corresponding to the deterministic flow identifier from the Ingress Flow Mapping Table, and determining the obtained EQ index number as the index number of the EQ for buffering the deterministic flow data packet.

3. The method of claim 1, wherein a currently scheduled physical queue in the current scheduling cycle Cycle x is different from the physical queue corresponding to the next scheduling cycle Cycle (x+1).

4. The method of claim 1 or 3, wherein obtaining the planned EQ resource of the next scheduling cycle Cycle (x+1) comprises:
in the current scheduling cycle Cycle x, reading an entry corresponding to the next scheduling cycle Cycle (x+1) in a local resource registering table; wherein a number of the entries in the local resource registering table is an integral multiple of a number of virtual cycle queues, VCQ, corresponding scheduling cycles on a present node;
obtaining the planned EQ resource of the Cycle (x+1) from the entry corresponding to the Cycle (x+1).

5. The method of claim 4, wherein if the number of the entries in the local resource registering table is TL, the number of the VCQs is d, and the TL is an integral multiple of d,
a sequence number of the entry corresponding to the Cycle (x+1) is (x+1) mod TL, an Index Virtual Queue, IVQ, of a corresponding virtual cycle queue configured for the entry corresponding to the Cycle (x+1) is (x+1) mod d, the physical queue corresponding to the next scheduling cycle Cycle (x+1) corresponds to a VCQ indicated by the IVQ, and a sequence number of the physical queue corresponding to the next scheduling cycle Cycle (x+1) is (x+1) mod 2;
a sequence number of the physical queue corresponding to the current scheduling cycle Cycle x is x mod 2.

6. The method of claim 1, wherein before buffering the deterministic flow data packet in the EQ corresponding to the index number of the EQ, the method further comprises:
if the received deterministic flow data packet carries a multicast group identifier, obtaining a multicast entry corresponding to the received deterministic flow data packet in an established deterministic flow multicast table; if the multicast entry comprises two or more target output interfaces, replicating the received deterministic flow data packet, wherein a number of the replicated deterministic flow data packets is a number of the target output interfaces;
for each egress interface, based on an identifier of the deterministic flow to which the deterministic flow data packet belongs and the target output interfaces, obtaining a corresponding deterministic flow information entry in a local deterministic flow information table; wherein the deterministic flow information entry at least comprises transmission information, the transmission information comprises information of a transmission path of the deterministic flow data packet and a segment routing identifier, SID, and the SID comprises scheduling cycle information for scheduling the deterministic flow data packet by each node in the transmission path; encapsulating the transmission information in the deterministic flow data packet, and then continuing performing the step of buffering the deterministic flow data packet in the EQ corresponding to the EQ index number.

7. The method of claim 1, wherein the deterministic flow data packet scheduled and transmitted in the physical queue at least carries a packet sequence number and a time parameter;
wherein the time parameter is used for performing latency compensation on the deterministic flow data packet by an egress node of the deterministic flow data packet in the deterministic network domain; the packet sequence number is a locally-recorded sequence number of a packet in the deterministic flow to which the deterministic flow data packet belongs;
when scheduling and transmitting the deterministic flow data packet in the physical queue, the method further comprises: increasing, by a set value, the locally-recorded sequence number of the packet in the deterministic flow to which the deterministic flow data packet belongs.

8. A method of transmitting a deterministic flow, applied to an egress node of the deterministic flow in a determinist network domain, and comprising:
receiving and buffering a deterministic flow data packet;
based on a current timestamp TSc and a time parameter carried in the deterministic flow data packet, determining a compensation time length Ct corresponding to the deterministic flow data packet;
based on the Ct, performing latency compensation and scheduling control on the deterministic flow data packet.

9. The method of claim 8, wherein the time parameter is a timestamp TSi when an ingress node of the deterministic flow data packet in the deterministic network domain receives the deterministic flow data packet; based on the current timestamp TSc and the time parameter carried in the deterministic flow data packet, determining the compensation time length Ct corresponding to the deterministic flow data packet comprises: determining a reference latency Rt corresponding to the deterministic flow data packet; based on the Rt, the TSc and the TSi, determining the compensation time length Ct;
or, the time parameter is the reference latency Rt and the TSi; based on the current timestamp TSc and the time parameter carried in the deterministic flow data packet, determining the compensation time length Ct corresponding to the deterministic flow data packet comprises: based on the Rt, the TSc and the TSi, determining the compensation time length Ct;
or, the time parameter is an estimated timestamp TSe, wherein TSe =TSi + Rt; and based on the current timestamp TSc and the time parameter carried in the deterministic flow data packet, determining the compensation time length Ct corresponding to the deterministic flow data packet comprises: based on the TSc and the TSe, determining the compensation time length Ct.

10. The method of claim 9, wherein determining the reference latency Rt corresponding to the deterministic flow data packet comprises: based on a deterministic flow identifier carried in the deterministic flow data packet, querying a local compensation information table, obtaining a reference latency Rt corresponding to the deterministic flow identifier from the compensation information table, and determining the obtained reference latency Rt as the reference latency Rt corresponding to the deterministic flow data packet.

11. The method of claim 9, wherein
based on the Rt, the TSc and the TSi, determining the compensation time length Ct comprises: calculating the Ct in the following equation: Ct=TSe - TSc; wherein TSe =TSi + Rt;
based on the TSc and the TSe, determining the compensation time length Ct comprises: calculating the Ct in the following equation: Ct=TSe - TSc.

12. The method of claim 8, wherein based on the Ct, performing latency compensation and scheduling control on the deterministic flow data packet comprises:
based on the compensation time length Ct and a current count value of a configured global timer, determining count information Expire corresponding to a compensated packet sending time point;
forming the Expire, a local flow identifier LocalFlowID, a packet sequence number SeqNo carried in the deterministic flow data packet and a packet buffering position for currently buffering the deterministic flow data packet into a packet discriminator PD corresponding to the deterministic flow data packet; wherein the local flow identifier LocalFlowID is a locally-recorded identifier or the deterministic flow identifier carried in the deterministic flow data packet;
based on the Expire carried in the PD, distributing the PD to a corresponding buffer queue;
performing scheduling control on the deterministic flow data packet corresponding to the PD in the buffer queue.

13. The method of claim 12, wherein the Expire is expressed in the following equation: Expire = GlbCnt + Ct/T; T is a cycle for the global timer to update count.

14. The method of claim 12, wherein based on the Expire carried in the PD, distributing the PD to the corresponding buffer queue comprises:
reading a current count value CountVal1 of the global timer;
based on the Expire carried in the PD and the current count value CountVal1 of the global timer, determining a corresponding target time vector header, TVH, from set TVH information;
based on the Expire carried in the PD, inserting the PD into a buffer queue indicated by a virtual queue header, VQH, corresponding to the target TVH.

15. The method of claim 14, wherein the TVH information comprises one TVH;
determining the corresponding target TVH from the set TVH information comprises: determining the one TVH comprised in the TVH information as the target TVH;
based on the Expire carried in the PD, inserting the PD into the buffer queue indicated by the VQH corresponding to the target TVH comprises: calculating a value m0 of bit0 to bit9 of the Expire, and storing the PD into the buffer queue indicated by VQHm0 under the one TVH.

16. The method of claim 15, wherein the buffer queue indicated by each VQH under the target TVH is schedule-controlled based on a control cycle;
performing scheduling control on the deterministic flow data packet corresponding to the PD in the buffer queue comprises:
in a current control cycle, determining a current buffer queue schedule-controlled in the current control cycle;
obtaining the PD from the current buffer queue; for each obtained PD, distributing the PD to a specified FIFO, and performing scheduling control on the deterministic flow data packet corresponding to the PD in the specified FIFO.

17. The method of claim 14, wherein the TVH information comprises different TVHs;
determining the corresponding target TVH from the set TVH information comprises:
calculating an Index in the following equation: Index = Expire - CountVal1 wherein CountVal1 indicates a current count value of the global timer;
when the Index is less than a first value, determining TVH0 as the target TVH; when the Index is greater than or equal to the first value, and less than a second value, determining TVH1 as the target TVH; when the Index is greater than or equal to the second value, and less than a third value, determining TVH2 as the target TVH.

18. The method of claim 17, wherein based on the Expire carried in the PD, inserting the PD into the buffer queue indicated by the VQH corresponding to the target TVH comprises:
when the target TVH is the TVH0, calculating a value m1 of bit0 to bit3 of the Expire, wherein m1 is one value of 0 to 15; and storing the PD into the buffer queue indicated by VQHm1 under the TVH0;
when the target TVH is the TVH1, calculating a value m2 of bit4 to bit7 of the Expire, wherein m2 is one value of 0 to 15; and storing the PD into the buffer queue indicated by VQHm2 under the TVH1;
when the target TVH is the TVH2, calculating a value m3 of bit8 to bit9 of the Expire, wherein m3 is one value of 0 to 3; and storing the PD into the buffer queue indicated by VQHm3 under the TVH2.

19. The method of claim 17 or 18, wherein performing scheduling control on the deterministic flow data packet corresponding to the PD in the buffer queue comprises:
based on a pulse trigger generated periodically by a configured Timer Generator, adjusting a storage position of the PD in the buffer queue;
performing scheduling control on the deterministic flow data packet corresponding to the adjusted PD in the buffer queue.

20. The method of claim 19, wherein based on the pulse trigger generated periodically by the configured Timer Generator, adjusting the storage position of the PD in the buffer queue comprises:
when monitoring the pulse trigger, obtaining a current count value CountVa2 of the global timer, and based on the CountVa2, calculating an index value Index; wherein Index= CountVal2[9:0], and CountVal2[9:0] represents a value indicated by bit0 to bit9 of the CountVa2;
if the bit0 to bit3 of the Index is 0, performing step *a* and otherwise performing step c;
at step *a*, calculating a value n1 of the bit4 to bit7 of the Index, wherein n1 is a value of 0 to 15; taking out the PD from the current buffer queue indicated by VQHn1 under the TVH1; for each obtained PD, performing the step of distributing the PD to the corresponding buffer queue based on the Expire carried in the PD; after, for each PD in the current buffer queue, performing the step of distributing the PD to the corresponding buffer queue based on the Expire carried in the PD, if the value n1 of the bit4 to bit7 of the Index is 0, performing step b; if the value n1 of the bit4 to bit7 of the Index is not 0, performing step c;
at step b, calculating a value n2 of the bit8 to bit9 of the Index, wherein n2 is a value of 0 to 3; taking out the PD from the current buffer queue indicated by VQHn2 under the TVH2; for each obtained PD, performing the step of distributing the PD to the corresponding buffer queue based on the Expire carried in the PD; after, for each PD in the current buffer queue, performing the step of distributing the PD to the corresponding buffer queue based on the Expire carried in the PD, performing step c;
at step c, calculating a value n3 of the bit0 to bit3 of the Index, wherein n3 is a value of 0 to 15; taking out the PD from the current buffer queue indicated by VQHn3 under the TVH0; and distributing each obtained PD to the specified FIFO;
performing scheduling control on the deterministic flow data packet corresponding to the adjusted PD in the buffer queue comprises: performing scheduling control on the deterministic flow data packet corresponding to the PD in the specified FIFO.

21. The method of claim 16 or 19, wherein performing scheduling control on the deterministic flow data packet corresponding to the PD in the specified FIFO comprises:
for each PD in the specified FIFO, obtaining the local flow identifier LocalFlowID and the packet sequence number SeqNo from the PD;
based on the LocalFlowID, obtaining LastSeqID and a configured maximum sequence number MaxSeqNum of the present deterministic flow from a local packet sequence table SeqInfoTbl; wherein the LastSeqID represents a sequence number of a last-forwarded deterministic flow data packet belonging to the deterministic flow corresponding to the LocalFlowID;
if the SeqNo is greater than the LastSeq and a sequence number difference of the SeqNo and the LastSeq is less than or equal to a sequence number interval threshold, or if the SeqNo is less than the LastSeq and a difference obtained by subtracting the LastSeq from a sum of the SeqNo and the MaxSeqNum is less than or equal to the sequence number interval threshold, determining the deterministic flow data packet corresponding to the PD is legal, and storing the deterministic flow data packet corresponding to the PD into a deterministic flow queue DQ for scheduling and transmission, and updating the LastSeq in the SeqInfoTbl to the SeqNo, and otherwise, determining the deterministic flow data packet corresponding to the PD is illegal, and deleting the deterministic flow data packet from the buffer queue.

22. An apparatus for transmitting a deterministic flow, applied to an ingress node of the deterministic flow in a deterministic network domain and comprising:
an input processing unit, configured to receive a deterministic flow data packet and determine an index number of an elastic buffer queue, EQ, for buffering the deterministic flow data packet;
an output interface unit, configured to buffer the deterministic flow data packet in the EQ corresponding to the index number of the EQ; in a current scheduling cycle Cycle x, obtain a planned EQ resource of a next scheduling cycle Cycle (x+1), wherein the EQ resource at least comprises: an EQ index number and a planned transmission resource amount of the EQ corresponding to the EQ index number; obtain at least one deterministic flow data packet from the EQ corresponding to the obtained EQ index number, wherein a transmission resource demand amount required by the obtained at least one deterministic flow data packet is less than or equal to the transmission resource amount; store the obtained at least one deterministic flow data packet into a physical queue corresponding to the next scheduling cycle Cycle (x+1) so as to schedule the deterministic flow data packet in the physical queue when the next scheduling cycle Cycle (x+1) arrives.

23. The apparatus of claim 22, wherein determining the index number of the elastic buffer queue, EQ, for buffering the deterministic flow data packet comprises:
based on a deterministic flow identifier carried in the deterministic flow data packet, querying an Ingress Flow Mapping Table to obtain an EQ index number corresponding to the deterministic flow identifier from the Ingress Flow Mapping Table, and determining the obtained EQ index number as the index number of the EQ for buffering the deterministic flow data packet.

24. The apparatus of claim 22, further comprising an internal switch unit and an output processing unit;
wherein the internal switch unit is configured to obtain a corresponding first multicast entry in an established first deterministic flow multicast table; if the first multicast entry comprises two or more target output processing units, replicate the deterministic flow data packet, wherein a number of the replicated deterministic flow data packets is a number of the target output processing units; and send the replicated deterministic flow data packets to the target output processing units;
each output processing unit at least comprises a data packet replicating unit, an output processing pipe and a flow management unit;
the data packet replicating unit is configured to obtain a corresponding second multicast entry in an established second deterministic flow multicast table; if the second multicast entry comprises two or more target output interfaces, replicate the deterministic flow data packet, wherein a number of the replicated deterministic flow data packets is a number of the target output interfaces; and send the replicated deterministic flow data packets to the output processing pipe corresponding to the target output interface;
the output processing pipe, based on an identifier of the deterministic flow to which the received deterministic flow data packet belongs and the target egress interface sending the deterministic flow data packet, obtains a corresponding deterministic flow information entry in a local deterministic flow information table, and encapsulates transmission information in the deterministic flow information entry into the deterministic flow data packet and sends the deterministic flow data packet to the flow management unit corresponding to the target egress interface, such that the flow management unit sends the deterministic flow data packet to the output interface unit corresponding to the target egress interface; wherein the transmission information comprises information of a transmission path of the deterministic flow data packet and a segment routing identifier, SID,, and the SID comprises scheduling cycle information for scheduling the deterministic flow data packet by each node in the transmission path.

25. The apparatus of claim 22, wherein the output interface unit comprises a classifier, a scheduler, and a distributor;
the classifier is configured to buffer the deterministic flow data packet into the EQ corresponding to the EQ index number;
the scheduler is configured to, in a current scheduling cycle Cycle x, schedule the deterministic flow data packet in a physical queue corresponding to the current scheduling cycle Cycle x;
the distributor is configured to, when the scheduler schedules the deterministic flow data packet in the physical queue corresponding to the current scheduling cycle Cycle x in the current scheduling cycle Cycle x, obtain a planned EQ resource of a next scheduling cycle Cycle (x+1), wherein the EQ resource at least comprises: an EQ index number and a planned transmission resource amount of the EQ corresponding to the EQ index number; obtain at least one deterministic flow data packet from the EQ corresponding to the obtained EQ index number, wherein a transmission resource demand amount required by the obtained at least one deterministic flow data packet is less than or equal to the transmission resource amount; store the obtained at least one deterministic flow data packet into a physical queue corresponding to the next scheduling cycle Cycle (x+1) so that the scheduler schedules and transmits the deterministic flow data packet in the physical queue when the next scheduling cycle Cycle (x+1) arrives.

26. The apparatus of claim 25, wherein a currently scheduled physical queue in the current scheduling cycle Cycle x is different from the physical queue corresponding to the next scheduling cycle Cycle (x+1).

27. The apparatus of claim 22 or 25, wherein obtaining the planned EQ resource of the next scheduling cycle Cycle (x+1) comprises:
in the current scheduling cycle Cycle x, reading an entry corresponding to the next scheduling cycle Cycle (x+1) in a local resource registering table; wherein a number of the entries in the local resource registering table is an integral multiple of a number of virtual cycle queues, VCQ, corresponding scheduling cycles on a present node;
obtaining the planned EQ resource of the Cycle (x+1) from the entry corresponding to the Cycle (x+1).

28. The apparatus of claim 27, wherein if the number of the entries in the local resource registering table is TL, the number of the VCQs is d, and the TL is an integral multiple of d,
a sequence number of the entry corresponding to the Cycle (x+1) is (x+1) mod TL, an Index Virtual Queue, IVQ, of a corresponding virtual cycle queue configured for the entry corresponding to the Cycle (x+1) is (x+1) mod d, the physical queue corresponding to the next scheduling cycle Cycle (x+1) corresponds to a VCQ indicated by the IVQ, and a sequence number of the physical queue corresponding to the next scheduling cycle Cycle (x+1) is (x+1) mod 2;
a sequence number of the physical queue corresponding to the current scheduling cycle Cycle x is x mod 2.

29. The apparatus of claim 22, wherein the deterministic flow data packet scheduled and transmitted in the physical queue at least carries a packet sequence number and a time parameter;
wherein the time parameter is used for performing latency compensation on the deterministic flow data packet by an egress node of the deterministic flow data packet in the deterministic network domain; the packet sequence number is a locally-recorded sequence number of a packet in the deterministic flow to which the deterministic flow data packet belongs;
when the deterministic flow data packet in the physical queue is scheduled and transmitted, the output interface unit further: increases, by a set value, the locally-recorded sequence number of the packet in the deterministic flow to which the deterministic flow data packet belongs.

30. An apparatus for transmitting a deterministic flow, applied to an egress node of the deterministic flow in a deterministic network domain and comprising an output interface unit;
wherein the output interface unit at least comprises a latency compensation calculation processing, CCP, unit and a scheduling control unit;
the CCP unit is configured to receive and buffer a deterministic flow data packet, and based on a current timestamp TSc and a time parameter carried in the deterministic flow data packet, determine a compensation time length Ct corresponding to the deterministic flow data packet;
the scheduling control unit is configured to, based on the Ct, perform latency compensation and scheduling control on the deterministic flow data packet.

31. The apparatus of claim 30, wherein the time parameter is a timestamp TSi when an ingress node of the deterministic flow data packet in the deterministic network domain receives the deterministic flow data packet;
the apparatus further comprises an output processing unit;
the output processing unit is configured to, after receiving the deterministic flow data packet earlier than the output interface unit, determine a reference latency Rt of the deterministic flow data packet;
the CCP unit is configured to, based on the Rt, the TSc and the TSi, determine the compensation time length Ct.

32. The apparatus of claim 30, wherein the time parameter is the reference latency Rt and the TSi;
the CCP unit is configured to, based on the Rt, the TSc and the TSi, determine the compensation time length Ct.

33. The apparatus of claim 30, wherein the time parameter is an estimated timestamp TSe, wherein TSe =TSi + Rt,
the CCP unit is configured to, based on the TSc and the TSe, determine the compensation time length Ct.

34. The apparatus of any one of claims 31 to 33, wherein determining the reference latency Rt corresponding to the deterministic flow data packet comprises: based on a deterministic flow identifier carried in the deterministic flow data packet, querying a local compensation information table, obtaining a reference latency Rt corresponding to the deterministic flow identifier from the compensation information table, and determining the obtained reference latency Rt as the reference latency Rt corresponding to the deterministic flow data packet.

35. The apparatus of any one of claims 31 or 32, wherein based on the Rt, the TSc and the TSi, determining the compensation time length Ct comprises: calculating the Ct in the following equation: Ct=TSe - TSc; wherein TSe =TSi + Rt.

36. The apparatus of claim 33, wherein based on the TSc and the TSe, determining the compensation time length Ct comprises: calculating the Ct in the following equation: Ct=TSe - TSc.

37. The apparatus of claim 30, wherein the scheduling control unit at least comprises: a distributor and a Packet Elimination Functions, PEF, unit;
the distributor is configured to, based on an Expire carried in a packet discriminator PD corresponding to the deterministic flow data packet, distribute the PD to the corresponding buffer queue; wherein the PD corresponding to the deterministic flow data packet at least carries the Expire, a local flow identifier LocalFlowID, a packet sequence number SeqNo carried in the deterministic flow data packet, and a packet buffering position for currently buffering the deterministic flow data packet, all of which are formed into the PD corresponding to the deterministic flow data packet; the Expire is count information corresponding to a compensated packet sending time point determined based on the compensation time length Ct and a current count value GlbCnt of a configured global timer; and the local flow identifier LocalFlowID is a locally-recorded identifier or the deterministic flow identifier carried in the deterministic flow data packet;
the PEF unit is configured to perform scheduling control on the deterministic flow data packet corresponding to the PD in the buffer queue.

38. The apparatus of claim 37, wherein the Expire is expressed in the following equation: Expire = GlbCnt + Ct/T; T is a cycle for the global timer to update count.

39. The apparatus of claim 37, wherein the distributor distributes the PD to the corresponding buffer queue based on the Expire carried in the PD, which comprises:
reading a current count value CountVal1 of the global timer;
based on the Expire carried in the PD and the current count value CountVal1 of the global timer, determining a corresponding target time vector header, TVH, from set TVH information;
based on the Expire carried in the PD, inserting the PD into a buffer queue indicated by a virtual queue header, VQH, corresponding to the target TVH.

40. The apparatus of claim 39, wherein the TVH information comprises one TVH;
determining the corresponding target TVH from the set TVH information comprises: determining the one TVH comprised in the TVH information as the target TVH;
based on the Expire carried in the PD, inserting the PD into the buffer queue indicated by the VQH corresponding to the target TVH comprises: calculating a value m0 of bit0 to bit9 of the Expire, and storing the PD into the buffer queue indicated by VQHm0 under the one TVH.

41. The apparatus of claim 40, wherein the buffer queue indicated by each VQH under the target TVH is schedule-controlled based on a control cycle;
performing scheduling control on the deterministic flow data packet corresponding to the PD in the buffer queue comprises:
in a current control cycle, determining a current buffer queue schedule-controlled in the current control cycle;
obtaining the PD from the current buffer queue; for each obtained PD, distributing the PD to a specified FIFO, and performing scheduling control on the deterministic flow data packet corresponding to the PD in the specified FIFO.

42. The apparatus of claim 39, wherein the TVH information comprises different TVHs;
determining the corresponding target TVH from the set TVH information comprises:
calculating an Index in the following equation: Index = Expire - CountVal1 wherein CountVal1 indicates a current count value of the global timer;
when the Index is less than a first value, determining TVH0 as the target TVH; when the Index is greater than or equal to the first value, and less than a second value, determining TVH1 as the target TVH; when the Index is greater than or equal to the second value, and less than a third value, determining TVH2 as the target TVH.

43. The apparatus of claim 42, wherein based on the Expire carried in the PD, inserting the PD into the buffer queue indicated by the VQH corresponding to the target TVH comprises:
when the target TVH is the TVH0, calculating a value m1 of bit0 to bit3 of the Expire, wherein m1 is one value of 0 to 15; and storing the PD into the buffer queue indicated by VQHm1 under the TVH0;
when the target TVH is the TVH1, calculating a value m2 of bit4 to bit7 of the Expire, wherein m2 is one value of 0 to 15; and storing the PD into the buffer queue indicated by VQHm2 under the TVH1;
when the target TVH is the TVH2, calculating a value m3 of bit8 to bit9 of the Expire, wherein m3 is one value of 0 to 3; and storing the PD into the buffer queue indicated by VQHm3 under the TVH2.

44. The apparatus of claim 42 or 43, wherein performing scheduling control on the deterministic flow data packet corresponding to the PD in the buffer queue comprises:
based on a pulse trigger generated periodically by a configured Timer Generator, adjusting a storage position of the PD in the buffer queue;
performing scheduling control on the deterministic flow data packet corresponding to the adjusted PD in the buffer queue.

45. The apparatus of claim 44, wherein based on the pulse trigger generated periodically by the configured Timer Generator, adjusting the storage position of the PD in the buffer queue comprises:
when monitoring the pulse trigger, obtaining a current count value CountVa2 of the global timer, and based on the CountVa2, calculating an index value Index; wherein Index= CountVal2[9:0], and CountVal2[9:0] represents a value indicated by bit0 to bit9 of the CountVa2;
if the bit0 to bit3 of the Index is 0, performing step *a* and otherwise performing step c;
at step *a*, calculating a value n1 of the bit4 to bit7 of the Index, wherein n1 is a value of 0 to 15; taking out the PD from the current buffer queue indicated by VQHn1 under the TVH1; for each obtained PD, performing the step of distributing the PD to the corresponding buffer queue based on the Expire carried in the PD; after, for each PD in the current buffer queue, performing the step of distributing the PD to the corresponding buffer queue based on the Expire carried in the PD, if the value n1 of the bit4 to bit7 of the Index is 0, performing step *b*; if the value n1 of the bit4 to bit7 of the Index is not 0, performing step c;
at step b, calculating a value n2 of the bit8 to bit9 of the Index, wherein n2 is a value of 0 to 3; taking out the PD from the current buffer queue indicated by VQHn2 under the TVH2; for each obtained PD, performing the step of distributing the PD to the corresponding buffer queue based on the Expire carried in the PD; after, for each PD in the current buffer queue, performing the step of distributing the PD to the corresponding buffer queue based on the Expire carried in the PD, performing step c;
at step c, calculating a value n3 of the bit0 to bit3 of the Index, wherein n3 is a value of 0 to 15; taking out the PD from the current buffer queue indicated by VQHn3 under the TVH0; and distributing each obtained PD to a specified FIFO;
performing scheduling control on the deterministic flow data packet corresponding to the adjusted PD in the buffer queue comprises: performing scheduling control on the deterministic flow data packet corresponding to the PD in the specified FIFO.

46. The apparatus of claim 41or 45, performing scheduling control on the deterministic flow data packet corresponding to the PD in the specified FIFO comprises:
for each PD in the specified FIFO, obtaining the local flow identifier LocalFlowID and the packet sequence number SeqNo from the PD;
based on the LocalFlowID, obtaining LastSeqID and a configured maximum sequence number MaxSeqNum of the present deterministic flow from a local packet sequence table SeqInfoTbl; wherein the LastSeqID represents a sequence number of a last-forwarded deterministic flow data packet belonging to the deterministic flow corresponding to the LocalFlowID;
if the SeqNo is greater than the LastSeq and a sequence number difference of the SeqNo and the LastSeq is less than or equal to a sequence number interval threshold, or if the SeqNo is less than the LastSeq and a difference obtained by subtracting the LastSeq from a sum of the SeqNo and the MaxSeqNum is less than or equal to the sequence number interval threshold, determining the deterministic flow data packet corresponding to the PD is legal, and storing the deterministic flow data packet corresponding to the PD into a deterministic flow queue DQ for scheduling and transmission, and updating the LastSeq in the SeqInfoTbl to the SeqNo, and otherwise, determining the deterministic flow data packet corresponding to the PD is illegal, and deleting the deterministic flow data packet from the buffer queue.

47. A system for transmitting a deterministic flow, comprising an ingress node of a deterministic flow in a deterministic network domain to which the method according to any one of claims 1 to 7 is applied, and an egress node of a deterministic flow in a determining network domain to which the method according to any one of claims 8 to 21 is applied.

48. An electronic device, comprising a processor and a machine readable storage medium; wherein
the machine readable storage medium stores machine executable instructions executable by the processor;
the processor is configured to execute the machine executable instructions to perform the method of any one of claims 1 to 21.

49. A machine readable storage medium, storing machine executable instructions executable by a processor, wherein the machine executable instructions are executed by the processor to perform the method of any one of claims 1 to 21.
